(19) Europäisches Patentamt
European Patent Office
Office européen des brevets

(11) **EP 2 247 016 A1**

(12) **EUROPEAN PATENT APPLICATION**
published in accordance with Art. 153(4) EPC

(43) Date of publication:
**03.11.2010 Bulletin 2010/44**

(51) Int Cl.:
*H04L 1/16* (2006.01)       *H04B 1/707* (2006.01)
*H04J 11/00* (2006.01)      *H04J 99/00* (2009.01)
*H04L 29/08* (2006.01)

(21) Application number: **09712858.1**

(22) Date of filing: **17.02.2009**

(86) International application number:
**PCT/JP2009/052650**

(87) International publication number:
**WO 2009/104582 (27.08.2009 Gazette 2009/35)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.02.2008   JP 2008040228**

(71) Applicant: **Sharp Kabushiki Kaisha**
**Osaka-shi, Osaka 545-8522 (JP)**

(72) Inventors:
• **NOGAMI, Toshizo**
**c/o SHARP KABUSHIKI KAISHA**
**Osaka 545-8522 (JP)**

• **YOSHIMOTO, Takashi**
**c/o SHARP KABUSHIKI KAISHA**
**Osaka 545-8522 (JP)**
• **YAMADA, Ryota**
**c/o SHARP KABUSHIKI KAISHA**
**Osaka 545-8522 (JP)**
• **SHIMEZAWA, Kazuyuki**
**c/o SHARP KABUSHIKI KAISHA**
**Osaka 545-8522 (JP)**

(74) Representative: **Müller - Hoffmann & Partner**
**Patentanwälte**
**Innere Wiener Strasse 17**
**81667 München (DE)**

(54) **RECEPTION DEVICE, TRANSMISSION DEVICE, COMMUNICATION SYSTEM, AND COMMUNICATION METHOD**

(57)       A reception device which communicates with a transmission device, the reception device including: a reception unit which receives a signal in which a plurality of data signals are multiplexed, from the transmission device; and a data signal detection unit which determines whether detection of transmission data for each data signal from the reception signal received by the reception unit is successful. The reception unit further receives, from the transmission device, a retransmission data signal corresponding to at least one of data signals for which transmission data detection has failed among the plurality of multiplexed data signals. The data signal detection unit determines whether re-detection of the transmission data included in the data signal corresponding to the retransmission data signal among the plurality of multiplexed data signals and a data signal not corresponding to the at least one retransmission data signal, from the reception signal and the retransmission data signal, is successful.

FIG. 6

**Description**

TECHNICAL FIELD

The present invention relates to a reception device, a transmission device, a communication system, and a communication method.
This application claims priority to and the benefit of Japanese Patent Applications No. 2008-040228 filed on February 21, 2008, the disclosure of which is incorporated herein by reference.

BACKGROUND ART

Known multi-carrier transmission methods include orthogonal frequency division multiplexing (OFDM), orthogonal frequency division multiple access (OFDMA), and so on. In a multi-carrier transmission method, the influence of multi-path interference is reduced by adding a guard interval (GI) section in a transmission device.
In such an access method, when there are incoming waves exceeding the guard interval section, a previous symbol is intruded into a fast Fourier transform (FFT) section and thus inter-symbol interference (ISI) or inter-carrier interference (ICI) may occur. The ICI occurs when a gap between symbols, that is, a signal discontinuity section, intrudes into the FFT section.
Patent Document 1 discloses a method of preventing characteristic degradation caused by the inter-symbol interference (ISI) or the inter-carrier interference (ICI) when incoming waves exceed the guard interval (GI). In the prior art, a reception device generates a duplicated signal (replica signal) of unwanted sub-carriers, which is a signal including an inter-symbol interference (ISI) component and an inter-carrier interference (ICI) component, using an error correction result (an output of a MAP decoder) after performing a demodulation operation once. The reception device performs the demodulation operation again on a signal obtained by removing the generated duplicated signal from a reception signal. This prevents the characteristic degradation caused by the inter-symbol interference (ISI) and the inter-carrier interference (ICI).
As combinations of a multi-carrier transmission method and a code division multiplexing (CDM) method, a multi carrier-code division multiplexing (MC-CDM) method, multi carrier-code division multiple access (MC-CDMA), spread-orthogonal frequency and code division multiplexing (OFCDM), and so on have been suggested.
According to these access methods, signals are subjected to code multiplexing by frequency-direction spreading using an orthogonal code such as the Walsh-Hadamard code and are received by a reception device under a multi-path environment. In the reception signals, orthogonality between orthogonal codes is not maintained when there is frequency variation in a period of the orthogonal codes. Therefore, multi-code interference (MCI) may occur, thereby causing the characteristic degradation.
Methods of preventing the characteristic degradation caused by the collapse of the orthogonality between the orthogonal codes are disclosed in Patent Document 2 and Non-Patent Document 1. In these prior arts, inter-code interference due to code multiplexing in MC-CDM communication is removed in a downlink and an uplink, despite a difference between the downlink and the uplink. In these prior arts, signals other than desired codes are removed using error-corrected or de-spread data to improve the reception characteristics.
These techniques are common in that, in order to cancel interferences such as the inter-symbol interference (ISI), the inter-carrier interference (ICI), and the multi-code interference (MCI), a reception device generates an interference signal based on a replica signal generated after demodulating a received signal, and performs interference cancellation. Repetition of this process results in a high-precision replica signal and high-precision interference cancellation.
However, when there is a great amount of interferences such as the inter-symbol interference (ISI), the inter-carrier interference (ICI), and the multi-code interference (MCI), the repetitive process in the interference canceller may not completely remove the interferences. Therefore, desired data may not be demodulated normally and an error may occur.
On the other hand, a known method of controlling an error is hybrid automatic repeat request (HARQ) in which an automatic repeat request (ARQ) and an error correction code, such as from turbo coding, are combined. In particular, well known methods of hybrid automatic repeat request (HARQ) include chase combining (CC) and incremental redundancy (IR) (Non-Patent Document 2 and Non-Patent Document 3).
For example, in hybrid automatic repeat request (HARQ) using chase combining (CC), a reception device requests retransmission of a completely identical packet to a transmission device when an error is detected in a reception packet. The reception device synthesizes the two reception packets to improve reception quality.
In hybrid automatic repeat request (HARQ) using incremental redundancy (IR), redundant bits are divided and sequentially retransmitted little by little. For this reason, since a coding rate may decrease with an increase in the number of retransmissions, an error correction capability is improved.

In hybrid automatic repeat request (HARQ), however, a problem may arise in that overhead increases in a link capacity due to the retransmission packets when the number of packets retransmitted is increased. Moreover, a problem may arise in that the number of retransmissions of the signals transmitted from the transmission device to the reception device increases and thus the end-to-end delay time increases.

Patent Document 1: Japanese Unexamined Patent Publication, First Publication No. 2004-221702
Patent Document 2: Japanese Unexamined Patent Publication, First Publication No. 2005-198223
Non-Patent Document 1: Y. Zhou, J. Wang, and M. Sawahashi, "Downlink Transmission of Broadband OFCDM Systems-Part I: Hybrid Detection," IEEE Transaction on Communication, Vol. 53, Issue 4, pp. 718-729, April 2005.
Non-Patent Document 2: D. Chase, "Code combining-A maximum likelihood decoding approach for combing and arbitrary number of noisy packets," IEEE Trans. Commun., vol. COM-33, pp. 385-393, May 1985.
Non-Patent Document 3: J. Hagenauer, "Rate-compatible punctured convolutional codes (RCPC codes) and their application," IEEE Trans. Commun., vol. 36, pp. 389-400, April 1988.

DISCLOSURE OF INVENTION

Problem to be Solved by the Invention

The present invention has been achieved in view of the above circumstances, and it is an object of the present invention to provide a reception device, a transmission device, a communication system, and a communication method capable of reducing the number of retransmissions of signals transmitted from the transmission device to the reception device.

Means for Solving the Problem

(1) The present invention has been made to solve the above-described problems. According to an aspect of the present invention, there is provided a reception device which communicates with a transmission device, the reception device including: a reception unit which receives a signal in which a plurality of data signals are multiplexed, from the transmission device; and a data signal detection unit which determines whether detection of transmission data for each data signal from the reception signal received by the reception unit is successful, wherein the reception unit further receives, from the transmission device, a retransmission data signal corresponding to at least one of data signals for which transmission data detection has failed among the plurality of multiplexed data signals, and the data signal detection unit determines whether re-detection of the transmission data included in the data signal corresponding to the retransmission data signal among the plurality of multiplexed data signals and a data signal not corresponding to the at least one retransmission data signal, from the reception signal and the retransmission data signal, is successful.

(2) In the reception device according to the aspect of the present invention, the data signal detection unit includes: a data signal replica generation unit which generates a data signal replica which is a replica of each data signal; an interference signal replica generation unit which generates an interference signal replica from the data signal replica; an interference removal unit which subtracts the interference signal replica from the reception signal; a signal synthesis unit which synthesizes the reception signals from which the interference signal replica is removed; and a determination unit which performs detection of the transmission data included in the plurality of multiplexed data signals from the signal synthesized by the signal synthesis unit.

(3) In the reception device according to the aspect of the present invention, the signal synthesis unit includes: a demodulation unit which demodulates the reception signal from which the interference signal replica is removed and the retransmission signal; and a synthesis unit which synthesizes the demodulation result of the reception signal from which the interference signal replica is removed, and the demodulation result of the retransmission signal.

(4) In the reception device according to the aspect of the present invention, the demodulation unit outputs likelihood information of the transmission data included in the reception signal from which the interference signal replica is removed, and the retransmission signal.

(5) In the reception device according to the aspect of the present invention, the demodulation unit outputs log likelihood ratios of the transmission data included in the reception signal from which the interference signal replica is removed and the retransmission signal, and the synthesis unit synthesizes the results by adding the log likelihood ratio of the transmission data included in the reception signal from which the interference signal replica is removed to the log likelihood ratio of the transmission data included in the retransmission signal.

(6) In the reception device according to the aspect of the present invention, the interference signal replica generation unit generates the interference signal replica for each of the detected data signals.

(7) In the reception device according to the aspect of the present invention, the interference signal replica generation unit generates the interference signal replicas for the data signals excluding an initially detected data signal among the plurality of detected data signals.

(8) The reception device according to the aspect of the present invention further including a report transmission unit which reports, to the transmission device, success/failure information for the data signal for which the transmission data re-detection is successful, based on success or failure in the transmission data re-detection output from the data signal detection unit.

(9) In the reception device according to the aspect of the present invention, the report transmission unit reports the success/failure information for each data signal to the transmission device based on success or failure in the transmission data detection for each of the multiplexed data signals, and the report transmission unit reports, to the transmission device, only the success/failure information for the data signal for which the transmission data re-detection is successful, based on the success or failure in the transmission data re-detection.

(10) The reception device according to the aspect of the present invention, further including a report transmission unit which reports, to the transmission device, success/failure information for the data signal for which the transmission data re-detection fails, based on success or failure in the transmission data re-detection output from the data signal detection unit.

(11) In the reception device according to the aspect of the present invention, the plurality of data signals are subjected to code spreading multiplexing, and the data signal detection unit includes a de-spreading unit which performs a de-spreading process on the reception signal.

(12) In the reception device according to the aspect of the present invention, the plurality of data signals are a spatially multiplexed stream, and the data signal detection unit includes a stream separation unit which performs stream separation on the reception signal.

(13) According to another aspect of the present invention, there is provided a transmission device which communicates with a reception device, including: a transmission signal generation unit which generates a signal in which a plurality of data signals are multiplexed, from a plurality of transmission data; a transmission unit which transmits the signal generated by the transmission signal generation unit to the reception device; and a report reception unit which receives success/failure information reported from the reception device, the success/failure information indicating whether transmission data detection for each data signal is successful, wherein the transmission signal generation unit further generates retransmission signals for some of the data signals for which the success/failure information indicates failure in the transmission data detection, and the transmission unit further transmits the retransmission signal to the reception device.

(14) The transmission device according to the aspect of the present invention further including a transmission data storage unit which stores the plurality of transmission data, wherein the transmission signal generation unit generates the retransmission signal from the transmission data stored in the transmission data storage unit.

(15) In the transmission device according to the aspect of the present invention, the report reception unit further receives success/failure information from the reception device, the success/failure information being reported from the reception device and indicating whether transmission data re-detection is successful.

(16) In the transmission device according to the aspect of the present invention, the transmission data storage unit deletes the transmission data for which the success/failure information indicating whether the transmission data re-detection is successful is reported.

(17) According to still another aspect of the present invention, there is provided a communication system including a transmission device and a reception device, wherein the transmission device includes: a transmission signal generation unit which generates a signal in which a plurality of data signals are multiplexed, from a plurality of transmission data; a transmission unit which transmits the signal generated by the transmission signal generation unit to the reception device; and a report reception unit which receives success/failure information reported from the reception device, the success/failure information indicating whether transmission data detection for each data signal is successful, the transmission signal generation unit further generates retransmission signals for some of the data signals for which the success/failure information indicates failure in the transmission data detection, and the transmission unit further transmits the retransmission signal to the reception device, and wherein the reception device includes: a reception unit which receives the signal in which a plurality of data signals are multiplexed, from the transmission device; and a data signal detection unit which determines whether detection of transmission data for each data signal from the reception signal received by the reception unit is successful, the reception unit further receives a retransmission data signal corresponding to at least one data signal for which the transmission data detection has failed, among the plurality of multiplexed data signals, and the data signal detection unit determines whether re-detection of the transmission data included in the data signal corresponding to the retransmission data signal among the plurality of multiplexed data signals and a data signal not corresponding to the at least one retransmission data signal, from the reception signal and the retransmission data signal, is successful.

(18) According to still another aspect of the present invention, there is provided a communication method using a reception device which communicates with a transmission device, wherein the reception device executes: receiving, by a reception unit, a signal in which a plurality of data signals are multiplexed, from the transmission device; determining, by a data signal detection unit, whether detection of transmission data for each data signal from the reception signal received by the reception unit is successful; further receiving, by the reception unit, a retransmission data signal corresponding to at least one of data signals for which the transmission data detection fails among the plurality of multiplexed data signals; and determining, by the data signal detection unit, whether re-detection of transmission data included in the data signal corresponding to the retransmission data signal among the plurality of multiplexed data signals and a data signal not corresponding to the at least one retransmission data signal, from the reception signal and the retransmission data signal is successful.

(19) According to still another aspect of the present invention, there is provided a communication method using a reception device which communicates with a transmission device, wherein the transmission device executes: generating, by a transmission signal generation unit, a signal in which a plurality of data signals are multiplexed, from a plurality of transmission data; transmitting, by a transmission unit, the signal generated by the transmission signal generation unit to the reception device; receiving, by a report reception unit, success/failure information reported from the reception device, the success/failure information indicating whether transmission data detection for each data signal is successful; generating, by the transmission signal generation unit, retransmission signals for some of the data signals for which the success/failure information indicates failure in the transmission data detection; and transmitting, by the transmission unit, the retransmission signal to the reception device.

Effect of the Invention

The reception device, the transmission device, the communication system, and the communication method according to the present invention are capable of reducing the number of retransmissions of signals transmitted from the transmission device to the reception device.

BRIEF DESCRIPTION OF THE DRAWINGS

FIG. 1 is a diagram illustrating an overview of embodiments of the present invention.
FIG. 2 is a schematic block diagram illustrating the configuration of a transmission device 100 according to a first embodiment of the present invention.
FIG. 3 is a schematic block diagram illustrating the configuration of a coding unit 114 of the transmission device 100 (FIG. 2) according to the first embodiment of the present invention.
FIG. 4 is a diagram illustrating an example of puncturing process performed by a rate matching unit 115 of the transmission device 100 (FIG. 2) according to the first embodiment of the present invention.
FIG. 5 is a diagram illustrating the puncturing process when another puncture pattern (puncture pattern A2), different from that of FIG. 4 is used.
FIG. 6 is a schematic block diagram illustrating the configuration of a reception device 500 according to the first embodiment of the present invention.
FIG. 7 is a schematic block diagram illustrating a main unit 510a of the repetitive parallel MCI canceller unit 510 according to the first embodiment of the present invention.
FIG. 8 is a schematic block diagram illustrating the configuration of an MCI replica generation unit 604 (FIG. 7) according to the first embodiment of the present invention.
FIG. 9 is a diagram illustrating an example of a de-puncturing process on the signal subjected to the puncturing process in FIG. 4.
FIG. 10 is a diagram illustrating the de-puncturing process when another puncture pattern (the puncture pattern A2 of FIG. 5) different from that of FIG. 9 is used.
FIG. 11 is a diagram illustrating an example of a bit LLR synthesis of a synthesis unit 609 according to the first embodiment of the present invention.
FIG. 12 is a flowchart illustrating an example of a process of extracting information bits from the initial transmission packets included in the reception signals in the reception device 500 and control performed by the reception packet management unit 509.
FIG. 13 is a flowchart illustrating an example of the process of extracting the information bits from the initial transmission packets, which are included in the previously received signals, including the initial transmission packets corresponding to the retransmission packets and the control performed by the reception packet management unit 509 (FIG. 6).
FIG. 14 is a diagram illustrating an exemplary flow of a series of processes of the detection of the reception data, the report of the success/failure information, the retransmission, and the re-detection of the reception data.
FIG. 15 is a diagram illustrating another exemplary flow of a series of processes of the detection of the reception data, the report of the success/failure information, the retransmission, and the re-detection of the reception data.

FIG. 16 is a diagram illustrating still another exemplary flow of a series of processes of the detection of the reception data, the report of the success/failure information, the retransmission, and the re-detection of the reception data.

FIG. 17 is a schematic block diagram illustrating the configuration of a reception device 1600 according to a second embodiment of the present invention.

FIG. 18 is a schematic block diagram illustrating the configuration of an interference canceller unit 1610 of the reception device 1600 according to the second embodiment of the present invention.

FIG. 19 is a schematic block diagram illustrating the configuration of a transmission device 1800 according to a third embodiment of the present invention.

FIG. 20 is a schematic block diagram illustrating the configuration of a reception device 1900 according to the third embodiment of the present invention.

FIG. 21 is a schematic block diagram illustrating the configuration of the interference canceller unit 1911 of the reception device 1900 according to the third embodiment of the present invention.

FIG. 22 is a flowchart illustrating an example of a process of extracting information bits from the initial transmission packets included in the reception signals in the reception device 1900 and control performed by the reception packet management unit 1910.

FIG. 23 is a flowchart illustrating an example of the process of extracting the information bits from the initial transmission packets, which are included in the previously received signals, including the initial transmission packets corresponding to the retransmission packets and the control performed by the reception packet management unit 1910.

Reference Symbols

100: TRANSMISSION DEVICE
101-1 to 101-N: CODE CHANNEL SIGNAL GENERATION UNIT
102: CODE MULTIPLEXING UNIT
103: INTERLEAVER UNIT
104: IFFT UNIT
105: PILOT SIGNAL GENERATION UNIT
106: MULTIPLEXING UNIT
107: GI INSERTION UNIT
108: RADIO TRANSMISSION UNIT
109: ANTENNA
110: RADIO RECEPTION UNIT
111: SEPARATION UNIT
112: RETRANSMISSION CONTROL UNIT
113: RETRANSMISSION CONTROL SIGNAL GENERATION UNIT
500: RECEPTION DEVICE
501: ANTENNA
502: RADIO RECEPTION UNIT
503: SEPARATION UNIT
504: PROPAGATION CHANNEL ESTIMATION UNIT
505: PROPAGATION CHANNEL ESTIMATION VALUE STORAGE UNIT
506: GI REMOVAL UNIT
507: FFT UNIT
508: RECEPTION SIGNAL STORAGE UNIT
509: RECEPTION PACKET MANAGEMENT UNIT
510: INTERFERENCE CANCELLER UNIT
511-1 to 511-N: CODE CHANNEL REPLICA GENERATION UNIT
512: BIT LLR STORAGE UNIT
513: SUCCESS/FAILURE INFORMATION SIGNAL GENERATION UNIT
514: MULTIPLEXING UNIT
515: RADIO TRANSMISSION UNIT
1600: RECEPTION DEVICE
1601: ANTENNA
1602: RADIO RECEPTION UNIT

1603: SEPARATION UNIT
1604: PROPAGATION CHANNEL ESTIMATION UNIT
1605: PROPAGATION CHANNEL ESTIMATION VALUE STORAGE UNIT
1606: GI REMOVAL UNIT
1607: FFT UNIT
1608: RECEPTION SIGNAL STORAGE UNIT
1609: RECEPTION PACKET MANAGEMENT UNIT
1610: INTERFERENCE CANCELLER UNIT
1612: BIT LLR STORAGE UNIT
1613: SUCCESS/FAILURE INFORMATION SIGNAL GENERATION UNIT
1614: MULTIPLEXING UNIT
1615: RADIO TRANSMISSION UNIT
1800: TRANSMISSION DEVICE
1801-1 to 1801-N: STREAM SIGNAL GENERATION UNITS
1809-1 to 1809-N: ANTENNAS
1810: RADIO RECEPTION UNIT
1811: SEPARATION UNIT
1812: RETRANSMISSION CONTROL UNIT
1813: RETRANSMISSION CONTROL SIGNAL GENERATION UNIT
1900: RECEPTION DEVICE
1901-1 to 1901-M: ANTENNAS
1903: RADIO RECEPTION UNIT
1904: SEPARATION UNIT
1905: PROPAGATION CHANNEL ESTIMATION UNIT
1906: PROPAGATION CHANNEL ESTIMATION VALUE STORAGE UNIT
1907: GI REMOVAL UNIT
1908: FFT UNIT
1909: RECEPTION SIGNAL STORAGE UNIT
1910: RECEPTION PACKET MANAGEMENT UNIT
1911: INTERFERENCE CANCELLER UNIT
1912: BIT LLR STORAGE UNIT
1913: SUCCESS/FAILURE INFORMATION SIGNAL GENERATION UNIT
1914: MULTIPLEXING UNIT
1915: RADIO TRANSMISSION UNIT

BEST MODE FOR CARRYING OUT THE INVENTION

Hereinafter, embodiments of the present invention will be described with reference to the drawings.

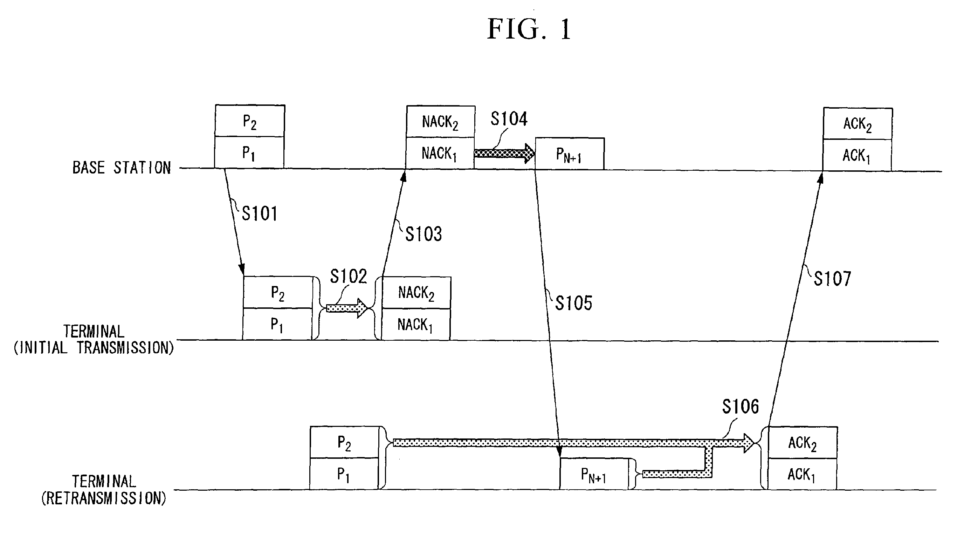

FIG. 1 is a diagram illustrating an overview of embodiments of the present invention. In FIG. 1, the horizontal axis represents time.
A base station serving as a transmission device multiplexes signals $P_1$ and $P_2$, which are initial transmission packets, and transmits the signals $P_1$ and $P_2$ as downlink data signals to a terminal serving as a mobile station via a downlink (step S101). The terminal receiving the signals after the time necessary for the transmission has elapsed stores reception signals obtained by multiplexing the signals $P_1$ and $P_2$ and performs an interference cancellation process and a data detection process (step S102).
The different multiplexed signals become interference components. That is, in inter-code interference, the signal $P_2$ is the interference component for the signal $P_1$ and the signal $P_1$ is the interference component for the signal $P_2$. The interference cancellation process is a process of removing a signal (replica) reproducing an interference signal from the reception signal. For example, a signal obtained by removing the replica of the signal $P_1$ from the reception signal is used to detect the signal $P_2$.
Hereinafter, a case in which errors occur in both packets of the signals $P_1$ and $P_2$ will be described. The terminal generates signals including success/failure information ($NACK_1$ and $NACK_2$) to report, to the base station, that the errors occur in the packets of the signals $P_1$ and $P_2$ and transmits the success/failure information as uplink success/failure information signals to the base station via an uplink (step S103).
The base station receiving the uplink success/failure information signal generates a signal $P_{N+1}$ as a retransmission packet for the signal $P_1$ which is the packet for which the NACK is returned (step S104). Then, the base station retransmits the signal $P_{N+1}$ as a downlink data signal to the terminal (step S105).
Here, the base station according to the embodiments of the present invention generates retransmission packets for some of a plurality of packets for which the NACK is returned from the terminal, and then transmits the retransmission packets to the terminal.

The terminal receiving the downlink data signal demodulates the signal $P_{N+1}$, which is the retransmission packet, and performs the interference cancellation process and the data detection process using the demodulation result of the signal $P_{N+1}$ and the reception signals in which the stored signals P and $P_2$ are multiplexed (step S106).

Here, in the interference cancellation process, as described above, the detection accuracy is improved by removing the replica of the other multiplexed packets. In general, when the retransmission is performed by the method of hybrid automatic repeat request (HARQ), higher detection accuracy can be achieved by a method of detecting the data using signals obtained by synthesizing the initial transmission packets and the retransmission packets, compared to a method of detecting the data using only the initial transmission packets. That is, the detection accuracy of the signal $P_1$ is improved above the detection of initial transmission by synthesizing the retransmission packets. Therefore, the detection accuracy of the signal $P_2$ is also improved with an improvement in the accuracy of the replica of the signal $P_1$.

Therefore, the qualities (error rates) of both the signal $P_1$, which is the initial transmission packet corresponding to the signal $P_{N+1}$ as the retransmission packet, and the signal $P_2$ multiplexed with the signal $P_1$ are improved. Therefore, there is a possibility that the success/failure result of the signal $P_2$ is different from the result of the initial transmission. Hereinafter, a case where no error occurs in either of the packets of the signals $P_1$ and $P_2$ will be described.

The terminal generates a signal including success/failure information ($ACK_1$ and $ACK_2$) for reporting, to the base station, that no error occurs in the packets of the signals $P_1$ and $P_2$ and transmits the signal as an uplink success/failure information signal via the uplink (step S107).

It is not necessary for the base station receiving the $ACK_1$ and the $ACK_2$ to subsequently retransmit signals corresponding to the signals $P_1$ and $P_2$. As a consequence, the error is reduced in both of the signals $P_1$ and $P_2$ by retransmitting the signal $P_{N+1}$ corresponding to the signal $P_1$. Therefore, the data can be detected in the signals $P_1$ and $P_2$ without performing retransmission corresponding to the signal $P_2$.

In this way, the plurality of packets initially transmitted from the transmission device (also called a base station) to the reception device (also called a terminal) are multiplexed and transmitted, and the data is detected in the reception device while removing the interference (other multiplexed packets). When the data detection fails, the retransmission packets are transmitted from the transmission device to the reception device using hybrid automatic repeat request (HARQ). When the reception device fails to detect the plurality of multiplexed and initially transmitted packets and the retransmission packets corresponding to some of the packets are transmitted from the transmission device, not only the some packets but also the other initially transmitted packets not detected first are re-detected. When the detection is successful, information indicating the detection success is transmitted from the reception device to the transmission device. In this way, since the number of downlink retransmission packets can be reduced, throughput can be improved.

[First Embodiment]

In a first embodiment, a repetitive parallel multi-code interference (MCI) canceller is used in the reception device. A repetitive MCI canceller generates an MCI replica in the reception side. MCI is suppressed by subtracting the MCI replica from the reception signal.

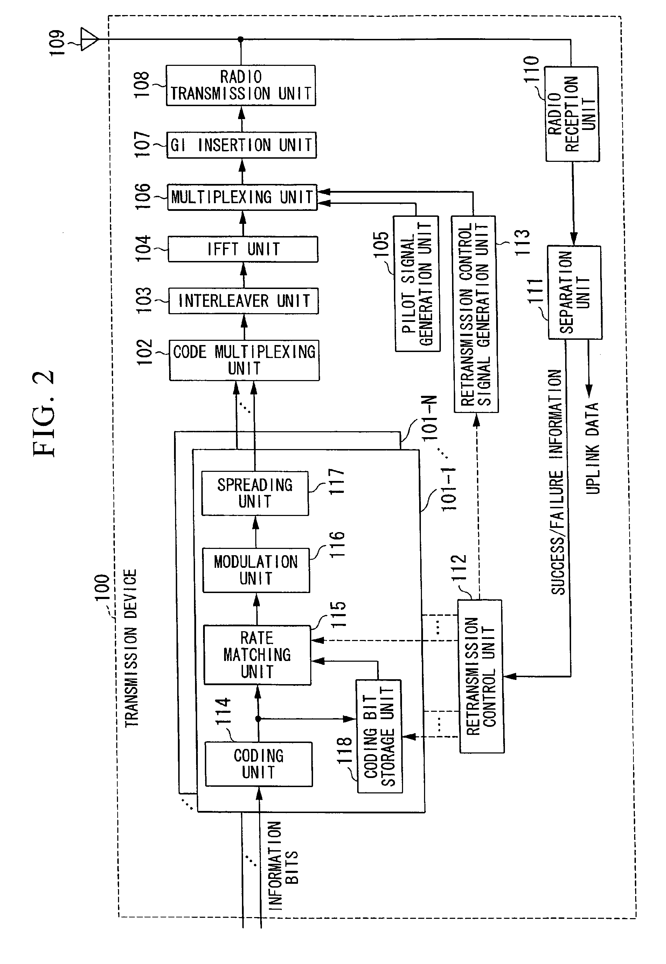

FIG. 2 is a schematic block diagram illustrating the configuration of the transmission device 100 according to the first embodiment of the present invention. The transmission device 100 includes code channel signal generation units 101-1 to 101-N (where N is a code multiplexing number), a code multiplexing unit 102, an interleaver unit 103, an IFFT (inverse fast Fourier transform) unit 104, a pilot signal generation unit 105, a multiplexing unit 106, a GI (guard interval) insertion unit 107, a radio transmission unit 108, an antenna 109, a radio reception unit 110, a separation unit 111, a retransmission control unit 112, and a retransmission control signal generation unit 113.

The code channel signal generation units 101-1 to 101-N each include a coding unit 114, a rate matching unit 115, a modulation unit 116, a spreading unit 117, and a coded bit storage unit 118.

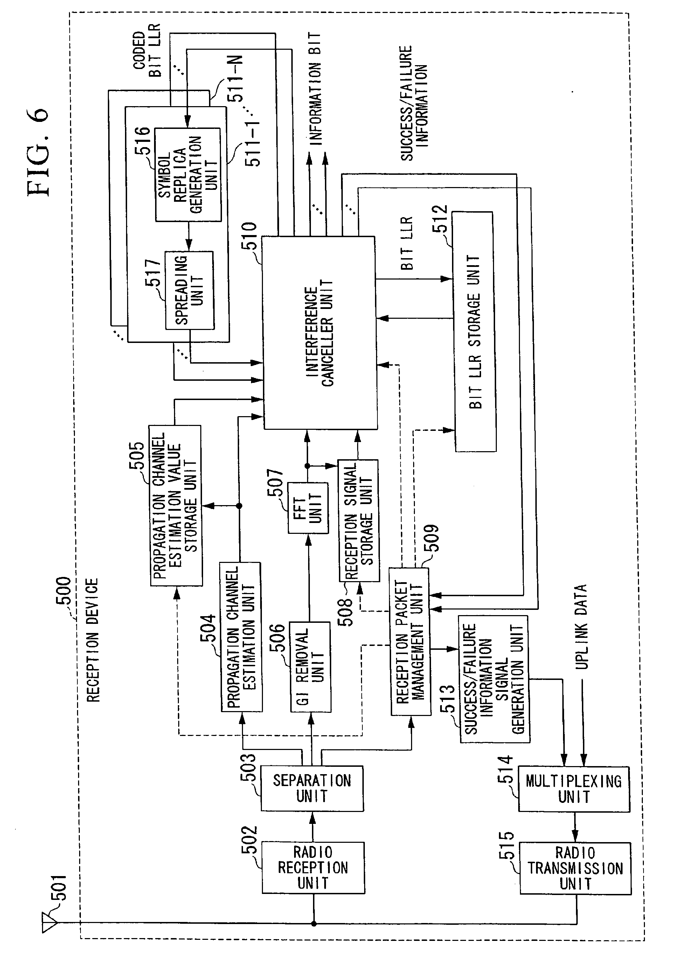

First, a process of transmitting a downlink signal from the transmission device 100 to a reception device 500 (see FIG. 6) will be described.

The code channel signal generation units 101-1 to 101-N (also called transmission signal generation units) generates a data signal of each code channel from information bits (transmission data).

The coding unit 114 performs a channel coding process on an information bit sequence and outputs the coded bit sequence to the rate matching unit 115 and the coded bit storage unit 118. Here, it is preferable that the coding unit 114 uses a coding process having an error correction capability, such as convolution coding or Read-Solomon coding, as a channel coding process. It is more preferable that the coding unit 114 uses a coding process having high error correction capability, such as turbo coding or low density parity check (LDPC) coding.

The rate matching unit 115 performs a puncturing (bit removal) process, a bit padding (bit insertion) process, or a bit repetition process on the coded bits output from the coding unit 114 or the coded bits output from the coded bit storage unit 118 according to a retransmission number output from the retransmission control unit 112, and then outputs the result to the modulation unit 116. Preferably, the rate matching unit 115 may further perform a bit interleaving process. An example of the puncturing process will be described as an example of the rate matching below.

The coded bit storage unit 118 (also called a transmission data storage unit) stores the coded bit sequence output from the coding unit 114. The coded bit storage unit 118 deletes the stored coded bit sequence under control of the retransmission control unit 112. These processes will be described in detail below. The coded bit storage unit 118 may not store the output of the coding unit 114, but may store the information bits.

The modulation unit 116 modulates the coded bit (punctured coded bit) sequence output from the rate matching unit 115, and then outputs the modulated symbol sequence to the spreading unit 117. At this time, the modulation unit 116 uses a modulation method such as phase shift keying (PSK) or quadrature amplitude modulation (QAM). Preferably, the modulation unit 116 may use the modulation method suitable for a propagation channel between the transmission device 100 and the reception device 500.

The spreading unit 117 duplicates the symbol sequence output from the modulation unit 116 by a spreading factor and multiplies the symbol sequence by a spreading code ($C_n$, n=1 to N) of each code channel. In this way, the spreading unit 117 generates a chip sequence (data signal of each code channel) and outputs the chip sequence to the code multiplexing unit 102.

The code multiplexing unit 102 multiplexes the data signals of the code channels output from the code channel signal generation units 101-1 to 101-N, and then outputs a resultant signal to the interleaver unit 103.

The interleaver unit 103 performs an interleaving process, such as chip interleaving or symbol interleaving, on the signal output from the code multiplexing unit 102, and then outputs the interleaved signal to the IFFT unit 104.

The IFFT unit 104 performs an IFFT process on the signals arranged in a frequency direction to convert the signals into signals of a time domain, and then outputs the signals to the multiplexing unit 106.

The pilot signal generation unit 105 generates a pilot signal used for propagation channel estimation in the reception device 500 (see FIG. 6), and outputs the pilot signal to the multiplexing unit 106.

The retransmission control signal generation unit 113 generates a signal (retransmission control signal) for notifying the reception device 500 of the number of retransmissions of the signal of each code channel reported by the retransmission control unit 112, and outputs the retransmission control signal to the multiplexing unit 106.

The multiplexing unit 106 multiplexes the data signal output from the IFFT unit 104, the pilot signal output from the pilot signal generation unit 105, and the retransmission control signal output from the retransmission control signal generation unit 113, and outputs a resultant signal to the GI insertion unit 107.

The GI insertion unit 107 adds a guard interval to the signal output from the multiplexing unit 106, and then outputs a resultant signal to the radio transmission unit 108.

The radio transmission unit 108 (also called a transmission unit) performs, for example, an up-converting process on the signal output from the GI insertion unit 107, and transmits the signal to the reception device 500 through the antenna 109.

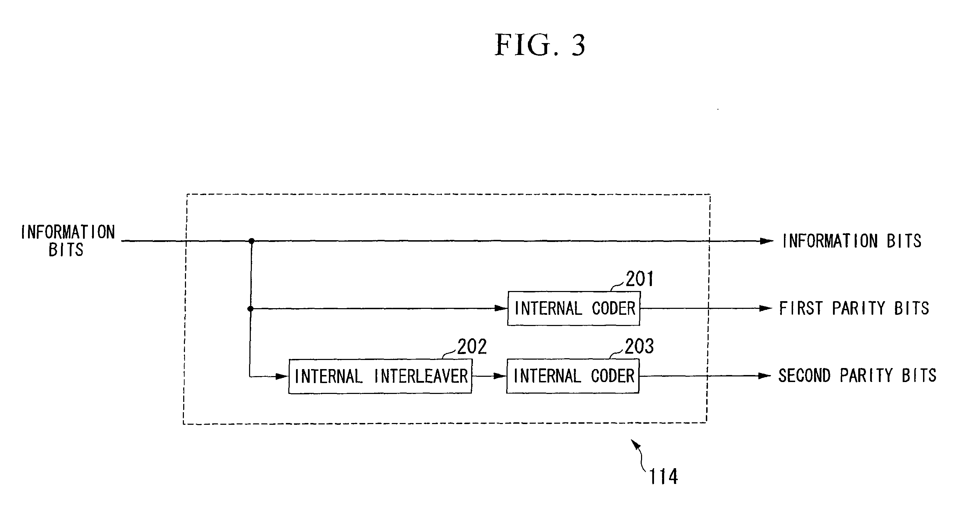

FIG. 3 is a schematic block diagram illustrating the configuration of the coding unit 114 of the transmission device 100 (FIG. 2) according to the first embodiment of the present invention. The coding unit 114 includes an internal coder 201, an internal interleaver 202, and an internal coder 203. Hereinafter, a case where turbo coding having a coding rate of 3 is used as the channel coding will be described.

When information bit sequences are input to the coding unit 114, three kinds of bit sequences, that is, the information bit sequence, a first parity bit sequence, and a second parity bit sequence, are output. The information bit sequence is the input information bit sequence itself. The first parity bits are the output result obtained by inputting the information bit sequence to the internal coder 201 and performing the coding process. The second parity bits are the output result obtained by interleaving the information bit sequence by the internal interleaver 202, inputting the interleaved information bit sequence to the internal coder 203, and performing the coding process.

Here, the internal coders 201 and 203 may be the same coders or may be different coders. Preferably, both the internal coders 201 and 203 may be recursive convolution coders. In FIG. 3, the coding unit 114 outputs the three sequences, but may output one sequence by performing parallel-to-serial conversion.

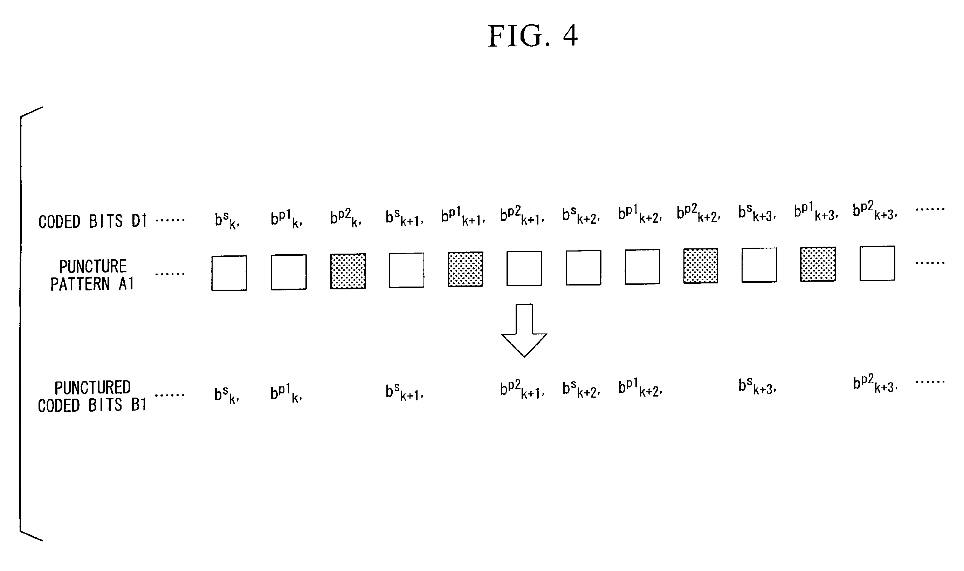

FIG. 4 is a diagram illustrating an example of the puncturing process in the rate matching unit 115 of the transmission device 100 (FIG. 2) according to the first embodiment of the present invention. Coded bits D1 include $b^s_k$, $b^{p1}_k$, $b^{p2}_k$, $b^s_{k+1}$, $b^{p1}_{k+1}$, $b^{p2}_{k+1}$, $b^s_{k+2}$, $b^{p1}_{k+2}$, $b^{p2}_{k+2}$, $b^s_{k+3}$, $b^{p1}_{k+3}$, $b^{p2}_{k+3}$, ... where $b^s_k$ is the k-th information bit, $b^{p1}_k$ is a k-th first parity bit, and $b^{p2}_k$ is a k-th second parity bit.

A puncture pattern A1 indicates whether to perform a puncturing (bit removal) process on each coded bit. White squares in FIG. 4 indicate that the bit is not removed and black squares indicate that the bit is removed.

When the puncturing process is performed on the coded bits D1 in the upper part of FIG. 4 using the puncture pattern A1 in the middle part of FIG. 4, punctured coded bits B1 ($b^s_k$, $b^{p1}_k$, $b^s_{k+1}$, $b^{p2}_{k+1}$, $b^s_{k+2}$, $b^{p1}_{k+2}$, $b^s_{k+3}$, $b^{p2}_{k+3}$, ...) can be obtained as coded bits as in the lower part of FIG. 4.

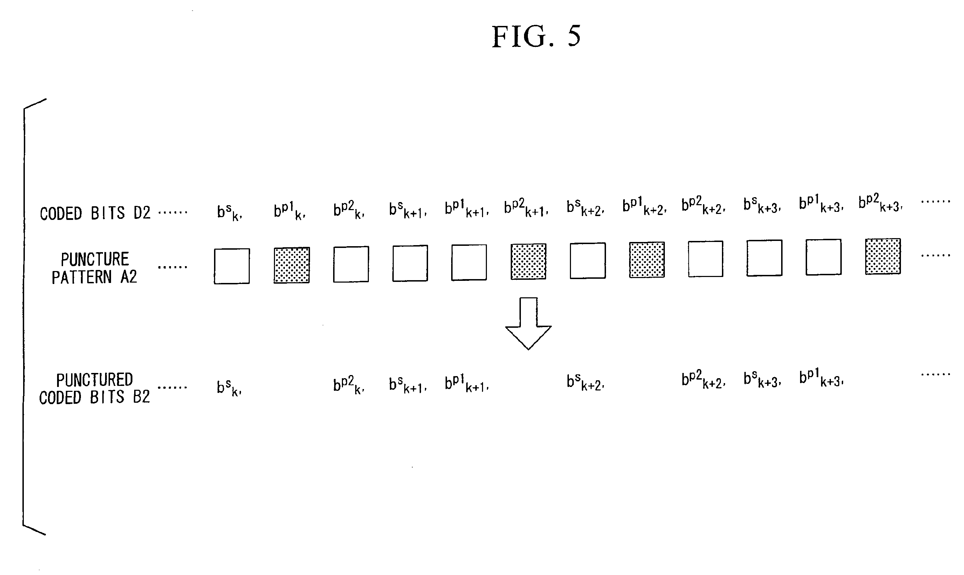

FIG. 5 is a diagram illustrating the puncturing process when a puncture pattern (puncture pattern A2) different from that of FIG. 4 is used. Coded bits D2 shown in the upper part of FIG. 5 are the same as the coded bits D1 shown in the upper part of FIG. 4.

The rate matching unit 115 outputs different punctured coded bits B1 using the different puncture pattern. That is, the rate matching unit 115 performs the puncturing process on the coded bits D2 ($b^s_k$, $b^{p1}_k$, $b^{p2}_k$, $b^s_{k+1}$, $b^{p1}_{k+1}$, $b^{p2}_{k+1}$, $b^s_{k+2}$, $b^{p1}_{k+2}$, $b^{p2}_{k+2}$, $b^s_{k+3}$, $b^{p1}_{k+3}$, $b^{p2}_{k+3}$, ...) using the puncture pattern A2 and outputs the punctured coded bits B2 ($b^s_k$, $b^{p2}_k$, $b^s_{k+1}$, $b^{p1}_{k+1}$, $b^s_{k+2}$, $b^{p2}_{k+2}$, $b^s_{k+3}$, $b^{p1}_{k+3}$, ...).

The rate matching unit 115 performs the above-described puncturing process on the coded bits output from the coding unit 114 or the coded bits output from the coded bit storage unit 118 under control of the retransmission control unit 112. Preferably, the rate matching unit 115 may perform the puncturing process so that the puncture pattern applied to the coded bits output from the coding unit 115 is different from the puncture pattern applied to the coded bits output from the coded bit storage unit 118. More preferably, a pattern in which the information bits are not removed is used for the puncture pattern applied to the coded bits output from the coding unit 114, and a pattern in which the bits removed in the puncture pattern applied to the coded bits output from the coding unit 115 are not removed is used for the puncture pattern applied to the coded bits output from the coded bit storage unit 118.

Here, the case where the bits are necessarily removed has been described, but the bits need not be necessarily removed. That is, a puncture pattern in which no bit is removed may be used.

FIG. 6 is a schematic block diagram illustrating the configuration of the reception device 500 according to the first embodiment of the present invention. The reception device 500 includes an antenna 501, a radio reception unit 502, a separation unit 503, a propagation channel estimation unit 504, a propagation channel estimation value storage unit 505, a GI removal unit 506, an FFT unit 507, a reception signal storage unit 508, a reception packet management unit 509, an interference canceller unit 510, code channel replica generation units 511-1 to 511-N, a bit LLR (log likelihood ratio) storage unit 512, a success/failure information signal generation unit 513, a multiplexing unit 514, and a radio transmission unit 515. The propagation channel estimation unit 504 to the bit LLR storage unit 512 are collectively called a data signal detection unit.

The code channel replica generation units 511-1 to 511-N each include a symbol replica generation unit 516 and a spreading unit 517.

First, the radio reception unit 502 (also called a reception unit) receives the signal from the transmission device 100 through the antenna 501, performs, for example, a down-converting process, and then outputs a resultant signal to the separation unit 503. The separation unit 503 separates the signal output from the radio reception unit 502 into a pilot signal, a retransmission control information signal, and a data signal.

The propagation channel estimation unit 504 estimates a characteristic of a propagation channel between the transmission device 100 and the reception device 500 using the pilot signal separated by the separation unit 503, and outputs a propagation channel estimation value to the propagation channel estimation value storage unit 505 and the interference canceller unit 510.

The propagation channel estimation value storage unit 505 stores the propagation channel estimation value output from the propagation channel estimation unit 504.

The GI removal unit 506 removes the guard interval from the data signal separated by the separation unit 503 and outputs a resultant signal to the FFT unit 207.

The FFT unit 507 performs an FFT process on the signal output from the GI removal unit 505 to convert the signal into a signal of a frequency domain, and then outputs the converted signal to the reception signal storage unit 508 and the interference canceller unit 510.

The reception signal storage unit 508 stores the signal of the frequency domain output from the FFT unit 507.

The reception packet management unit 509 gives various instructions to the interference canceller unit 510, the bit LLR storage unit 512, the reception signal storage unit 508, and the propagation channel estimation value storage unit 505 based on the retransmission control information signal separated by the separation unit 503 and success/failure information output from the interference canceller unit 510. The reception packet management unit 509 instructs the success/failure information signal generation unit 513 to generate a success/failure information signal. The operation of the reception packet management unit 509 will be described in detail below.

The interference canceller unit 510 detects the information bit sequence from the signal output from the FFT unit 507, while referring to the propagation channel estimation value output from the propagation channel estimation unit 504 based on the instruction of the reception packet management unit 509. The interference canceller unit 510 outputs a coded bit LLR to the code channel replica generation units 511-1 to 511-N and also outputs the success/failure information to the reception packet management unit 509.

When the bit LLR is output from the bit LLR storage unit 512, the interference canceller unit 510 detects the information bits from the reception signal output from the reception signal storage unit 508 using the bit LLR and the propagation channel estimation value output from the propagation channel estimation value storage unit 505. The operation of the interference canceller unit 510 will be described in detail below.

The code channel replica generation units 511-1 to 511-N (also called a data signal replica generation units) generate the replicas in code channels corresponding to spreading codes $C_1$ to $C_N$. Specifically, the symbol replica generation unit 516 generates the symbol replica based on the coded bit LLR output from the interference canceller unit 510.

The symbol replicas output from the symbol replica generation unit 516 are duplicated by a spreading factor in the spreading unit 517 and are multiplied by the spreading codes $C_1$ to $C_N$ in the code channels, so that the code channel replicas (data signal replicas) are generated.

The bit LLR storage unit 512 stores the bit LLR output from the interference canceller unit 510 based on the instruction of the reception packet management unit 509. When the retransmission packet is multiplexed in the reception signal, the bit LLR storage unit 512 outputs the stored bit LLR to the interference canceller unit 510 and stores the bit LLR output from the interference canceller unit 510 again. That is, the bit LLR storage unit 512 replaces the stored bit LLR with the newly output bit LLR.

The success/failure information signal generation unit 513 generates the success/failure information signal based on the instruction of the reception packet management unit 509, and outputs the success/failure information signal to the multiplexing unit 514.

The multiplexing unit 514 multiplexes the success/failure information signal output from the success/failure information signal generation unit 513 and the uplink data signal, and outputs the multiplexed signal to the radio transmission unit 515. The radio transmission unit 515 (also called a report transmission unit) performs, for example, an up-converting process on the signal output from the multiplexing unit 514 and transmits the signal to the transmission device 100 (FIG. 2) through the antenna 501.

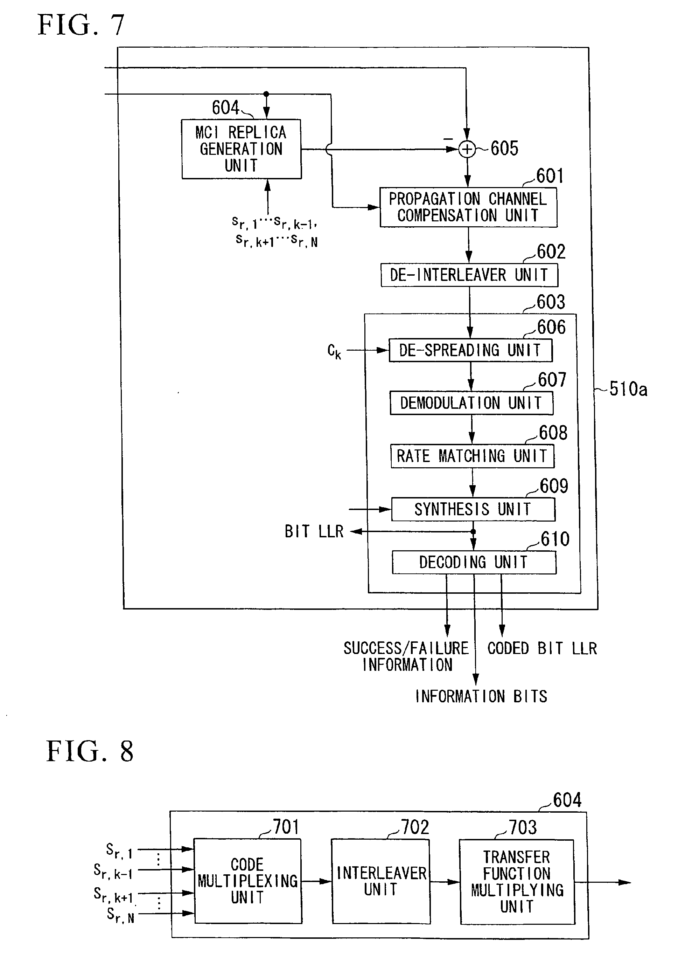

FIG. 7 is a schematic block diagram illustrating a main unit 510a of the repetitive parallel MCI interference canceller unit 510 according to the first embodiment of the present invention. Hereinafter, a case where a signal of a code channel corresponding to one spreading code $C_k$ is detected will be described. The same is applied to the detection of the signals of the code channel corresponding to the other spreading codes. A series of processes of the interference canceller unit 510 is repeatedly executed except for a case where all information bits can be detected first with no error.

The main unit 510a of the interference canceller unit 510 includes a propagation channel compensation unit 601, a de-interleaver unit 602, a code separation unit 603, an MCI replica generation unit 604, and a subtraction unit 605 (also called an interference removal unit).

The code separation unit 603 includes a de-spreading unit 606, a demodulation unit 607, a rate matching unit 608, a synthesis unit 609, and a decoding unit 610 (also called a determination unit).

The code channel replicas except for the code channel replica $S_{r,k}$ among code channel replicas $S_{r,1}$ to $S_{r,k-1}$, $S_{r,k+1}$, to $S_{r,N}$ output from the code channel replica generation units 511-1 to 511-N are input to the MCI replica generation unit 604 (also called an interference signal replica generation unit). The propagation channel estimation value output from the propagation channel estimation unit 504 (or the propagation channel estimation value storage unit 505) is also input to the MCI replica generation unit 604. The MCI replica generation unit 604 generates MCI replicas (interference replicas) based on the code channel replicas and the propagation channel estimation value and outputs the MCI replicas to the subtraction unit 605.

FIG. 8 is a schematic block diagram illustrating the configuration of the MCI replica generation unit 604 (FIG. 7) according to the first embodiment of the present invention. The MCI replica generation unit 604 includes a code multiplexing unit 701, an interleaver unit 702, and a transfer function multiplying unit 703.

The code multiplexing unit 701 multiplexes the code channel replicas $S_{r,1}$, $S_{r,k-1}$, $S_{r,k+1}$, and $S_{r,N}$ input by the MCI replica generation unit 604 and outputs a resultant signal to the interleaver unit 702. The interleaver unit 702 interleaves the signal output from the code multiplexing unit 701 and outputs the interleaved signal to the transfer function multiplying unit 703. The transfer function multiplying unit 703 multiplies the signal output from the interleaver unit 702 by a transfer function (or the propagation channel estimation value) calculated from the propagation channel estimation value to generate the MCI replica. Since the interleaver unit 702 performs the same process as the interleaver unit 103, the interleaver unit 702 can be realized by the same circuit. It is not necessary for the MCI replica generation unit 604 to generate the MCI replica the first time.

Referring back to FIG. 7, the subtraction unit 605 subtracts the MCI replica from the output of the FFT unit 507 (or the reception signal storage unit 508) and outputs a resultant signal to the propagation channel compensation unit 601. The propagation channel compensation unit 601 performs a propagation channel compensation process on the output of the subtraction unit 605 based on the propagation channel estimation value output from the propagation channel estimation unit 504 (or the propagation channel estimation value storage unit 505), and outputs a resultant signal to the de-interleaver unit 602. Specifically, the propagation channel compensation unit 601 reproduces, for example, a phase rotation occurring due to the influence of the propagation channel. Preferably, the propagation channel compensation unit 601 may calculate an MRC weight, an ORC weight, or a minimum mean squared error (MMSE) weight from the propagation channel estimation value and multiply the output of the subtraction unit 605 by the calculated weight.

The de-interleaver unit 602 performs a de-interleaving process on the output of the propagation channel compensation unit 601 and outputs the resultant signal to the de-spreading unit 606. The de-interleaving process is a process of rearranging the order rearranged by the interleaving process of the interleaver unit 103 to return to the original order.

The de-spreading unit 606 performs a de-spreading process using the spreading code $C_k$ to extract a signal of the code channel corresponding to the spreading code $C_k$ and outputs the de-spread signal to the demodulation unit 607. The spread coefficient $C_k$ is any one of the spread coefficients $C_1$ and $C_2$ to $C_N$. By selecting the spread coefficient $C_k$, detection order of successive interference cancellers can be changed.

The demodulation unit 607 demodulates the de-spread modulated symbol sequence, which consists of signals output from the de-spreading unit 606, and extracts the signal of each bit. Then, the demodulation unit 607 outputs the LLR of each bit to the rate matching unit 608. The propagation compensation unit 601, the demodulation unit 607, and the rate matching unit 608 are collectively called a demodulation unit.

Hereinafter, a case where the bit LLR (LLR of each bit) is output as the demodulation result in the demodulation unit 607 will be described. Here, QPSK (Quadrature Phase Shift Keying) modulation will be described as an example where the bit LLR is calculated. On the assumption that the bit sequence upon transmitting a reception signal S' is $b_0$, $b_1$ (where $b_0$ and $b_1$ are 1 or -1), a transmission signal S obtained by QPSK-modulating the bit sequence $b_0$, $b_1$ can be expressed as Equation (1).

[Equation 1]

$$s = \frac{1}{\sqrt{2}}(b_0 + jb_1) \qquad \cdots (1)$$

In the equation, j denotes an imaginary unit. $\lambda_1(b_0)$ that is the bit LLR of $b_0$ is expressed by Equation (2).

[Equation 2]

$$\lambda_1(b_0) = \frac{2\,Re(S')}{\sqrt{2}(1-\mu)} \qquad \cdots (2)$$

The bit LLR of $b_1$ is obtained by exchanging the real part and the imaginary part in Equation (2). In this equation, Re(x) denotes the real part of the complex number x and $\mu$ denotes the equivalent amplitude of the reception signal, that is, the value serving as the amplitude reference of the reception signal.

In this case, a symbol replica $S_r'$ is calculated using Equation (3) in the process of the symbol replica generation unit 516.

[Equation 3]

$$S_r' = \frac{1}{\sqrt{2}}tanh(\lambda_2(b_0)/2) + \frac{j}{\sqrt{2}}tanh(\lambda_2(b_1)/2) \qquad \cdots (3)$$

In this equation, the bit LLR constituting the symbol replica $S_r'$ is $\lambda_2(b_0)$ and $\lambda_2(b_1)$. Here, $\lambda()$ is the output of the decoding unit 607.

The rate matching unit 608 performs inverse processes of the puncturing (bit removal) process, the bit padding (bit insertion) process, or the bit repetition process performed by the rate matching unit 115 (FIG. 2) of the transmission device 100. That is, the rate matching unit 608 performs a bit de-puncturing (bit LLR insertion) process on the punctured bits subjected to the puncturing process, performs the bit removal process on the bits subjected to the bit padding (bit insertion) process, and performs a bit LLR synthesis process on the bits subjected to the bit repetition process.

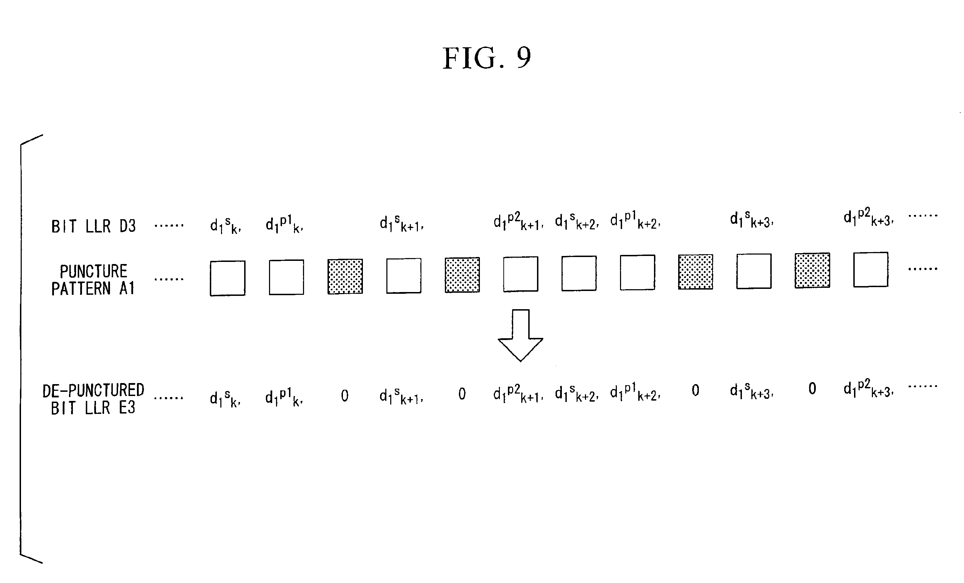

FIG. 9 is a diagram illustrating an example of the de-puncturing process on the signal subjected to the puncturing process in FIG. 4. A bit LLR D3 includes $d_1{}^{s_k}$, $d_1{}^{p1_k}$, $d_1{}^{s_{k+1}}$, $d_1{}^{p2_{k+1}}$, $d_1{}^{s_{k+2}}$, $d_1{}^{p1_{k+2}}$, $d_1{}^{s_{k+3}}$, $d_1{}^{p2_{k+3}}$, .... $d_1{}^{s_k}$ is the bit LLR of a k-th information bit. $d_1{}^{p1_k}$ is the bit LLR of a k-th first parity bit. $d_1{}^{p2_k}$ is the bit LLR of a k-th second parity bit.

The puncture pattern A1 indicates whether to perform the puncturing (bit removal) process on the respective coded bits. White squares in FIG. 9 indicate that the bit is not removed and black squares indicate that the bit is removed. As the bit LLR for the removed bit, 0 is inserted. When the de-puncturing process is performed on the bit LLR D3 in the upper part of FIG. 9 using the puncture pattern A1 in the middle part of FIG. 9, a de-punctured LLR E3 ($d_1{}^{s_k}$, $d_1{}^{p1_k}$, 0, $d_1{}^{s_{k+1}}$, 0, $d_1{}^{p2_{k+1}}$, $d_1{}^{s_{k+2}}$, $d_1{}^{p1_{k+2}}$, 0, $d_1{}^{s_{k+3}}$, 0, $d_1{}^{p2_{k+3}}$, ...) can be obtained as the bit LLR, as in the lower part of FIG. 9.

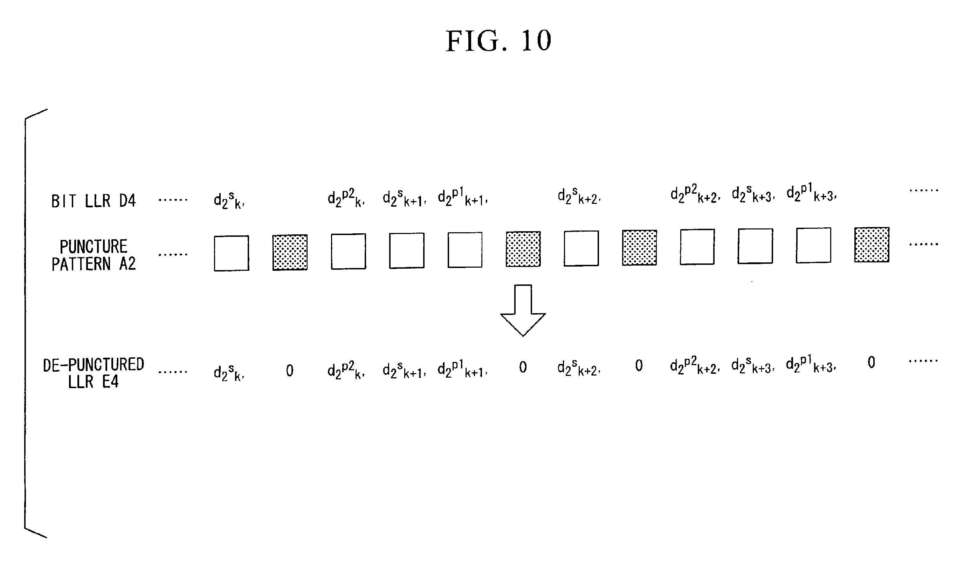

FIG. 10 is a diagram illustrating the de-puncturing process when a puncture pattern A2 (the puncture pattern A2 of FIG. 5) different from that of FIG. 9 is used. As in FIG. 9, 0 is inserted as the bit LLR for the removed bit. In this way, the rate matching unit 608 inserts 0 as the bit LLR for the removed bit. The rate matching unit 608 outputs the bit LLR (including the LLR of 0) in all coded bits. That is, the rate matching unit 608 performs the de-puncturing process on the bit LLR D4 ($d_2{}^{s_k}$, $d_2{}^{p2_k}$, $d_2{}^{s_{k+1}}$, $d_2{}^{p1_{k+1}}$, $d_2{}^{s_{k+2}}$, $d_2{}^{p2_{k+2}}$, $d_2{}^{s_{k+3}}$, $d_2{}^{p1_{k+3}}$, ... ) using the puncture pattern A2 and outputs the de-punctured LLR E4 ($d_2{}^{s_k}$, 0, $d_2{}^{p2_k}$, $d_2{}^{s_{k+1}}$, $d_2{}^{p1_{k+1}}$, 0, $d_2{}^{s_{k+2}}$, 0, $d_2{}^{p2_{k+2}}$, $d_2{}^{s_{k+3}}$, $d_2{}^{p1_{k+3}}$, 0, ...).

The synthesis unit 609 synthesizes and outputs the bit LLR output from the rate matching unit 608 without change, when the packets are initially transmitted or the packets are retransmitted a first time. The propagation compensation unit 601, the demodulation unit 607, the rate matching unit 608, and the synthesis unit 609 are collectively called a signal synthesis unit.

On the other hand, the synthesis unit 609 outputs the bit LLR (the bit LLR in the corresponding initial transmission packets) stored in the bit LLR storage unit 512 and the bit LLR output from the rate matching unit 608.

The bit LLR output from the synthesis unit 609 is input to the decoding unit 610. When the packets are retransmitted, the output bit LLR is output to the bit LLR storage unit 512.

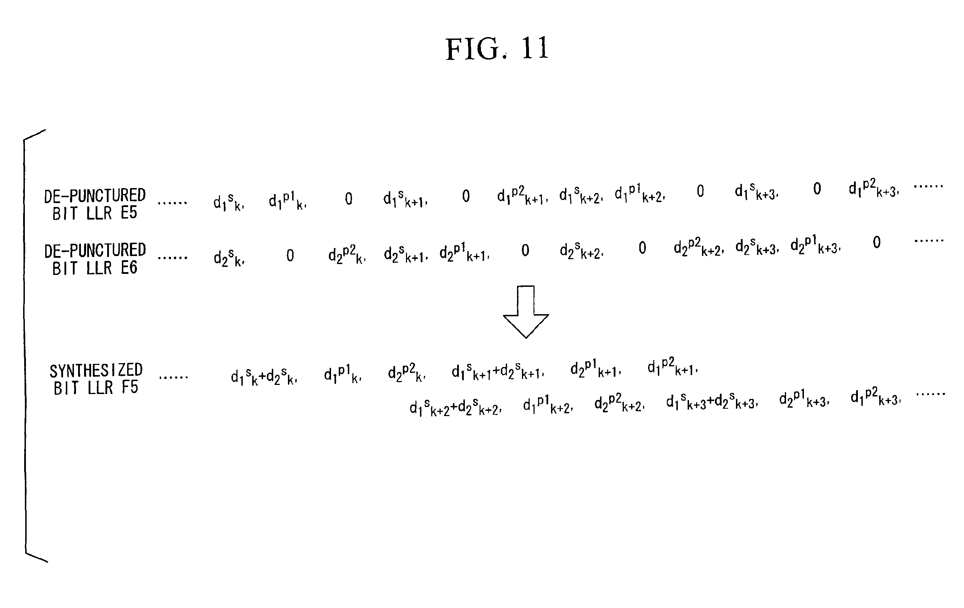

FIG. 11 is a diagram illustrating an example of bit LLR synthesis of the synthesis unit 609 according to the first embodiment of the present invention. In FIG. 11, the de-punctured bits LLR in FIGS. 9 and 10 are synthesized.

A de-punctured bit LLR E5 ($d_1{}^{s_k}$, $d_1{}^{p1_k}$, 0, $d_1{}^{s_{k+1}}$, 0, $d_1{}^{p2_{k+1}}$, $d_1{}^{s_{k+2}}$, $d_1{}^{p1_{k+2}}$, 0, $d_1{}^{s_{k+3}}$, 0, $d_1{}^{p2_{k+3}}$, ...) and a de-punctured bit LLR E6 ($d_2{}^{s_k}$, 0, $d_2{}^{p2_k}$, $d_2{}^{s_{k+1}}$, $d_2{}^{p1_{k+1}}$, 0, $d_2{}^{s_{k+2}}$, 0, $d_2{}^{p2_{k+2}}$, $d_2{}^{s_{k+3}}$, $d_2{}^{p1_{k+3}}$, 0, ...) subjected to the puncturing process and the de-puncturing process using another puncture pattern are sequences with the same length (the length of the coded bits). The synthesis unit 609 calculates a synthesized bit LLR F5 by adding the de-punctured bit LLR E5 to the de-punctured bit LLR E6 in each bit.

The decoding unit 610 performs a decoding process using the bit LLR output from the synthesis unit 609 and outputs an information bit, which is the decoding result, success/failure information indicating whether an error is included in the information bit, and the coded bit LLR. The decoding unit 610 may not output the information bit but outputs the coded bit LLR, when an error is included. The decoding unit 610 may not output the coded bit LLR but outputs the information bit, when an error is not included.

The error detection of the information bit may be performed in the reception device 500, for example, by adding a cyclic redundancy check (CRC) to the information bit in the transmission device 100.

Next, a process of transmitting an uplink signal from the reception device 500 to the transmission device 100 will be described with reference to FIG. 2.

The signals transmitted from the reception device 500 are received by the radio reception unit 110 (also called a report reception unit) via the antenna 109.

The separation unit 111 separates the reception signal into the uplink data and the success/failure information.

The retransmission control unit 112 prepares to transmit the retransmission packets (retransmission data signal) based on the success/failure information separated from the uplink data in the separation unit 111. When the success/failure information is information indicating reception failure (NACK), the retransmission control unit 112 instructs the coded bit storage unit 118 to output the coded bit sequence corresponding to the packet for which the NACK is returned. The retransmission control unit 112 instructs the rate matching unit 115 to perform a rate matching process on the coded bit sequence output from the coded bit storage unit 118.

The rate matching process may be the same process performed at the initial transmission time, but it is preferable that the rate matching process is modified in accordance with the number of retransmissions. Moreover, the retransmission control unit 112 notifies the retransmission control signal generation unit 113 of information indicating the number of retransmissions of multiplexed packets. The retransmission control signal generation unit 113 generates a signal (retransmission control signal) indicating the information reported from the retransmission control unit 112, and then outputs the generated signal to the multiplexing unit 106.

It is preferable that the information indicating the number of retransmissions of the multiplexed packets is information indicating the number itself. However, this information may be information obtained by processing the number of retransmissions. When the success/failure information is information indicating the reception success (ACK), the retransmission control unit 112 instructs the coded bit storage unit 118 to release a memory area where the coded bit sequence corresponding to the packet for which the ACK is returned is stored.

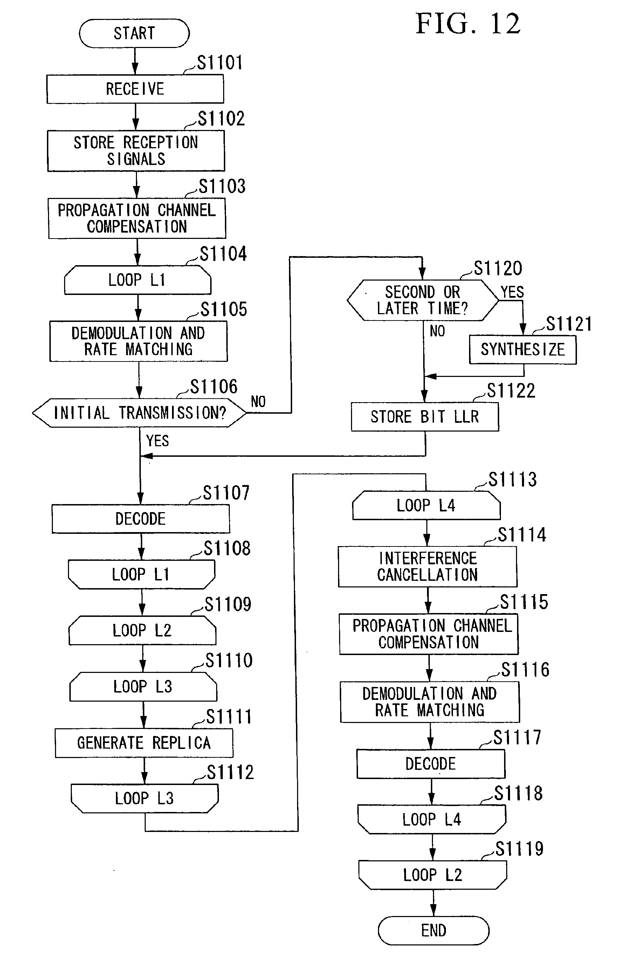

FIG. 12 is a flowchart illustrating an example of a process of extracting information bits from the initial transmission packets included in the reception signal in the reception device 500 and control performed by the reception packet management unit 509.

First, the signal transmitted by the transmission device 100 is received by the radio reception unit 502 (step S1101). Subsequently, the reception signal is processed in the separation unit 503, the GI removal unit 506, and the FFT unit 507, and is stored in the reception signal storage unit 508 (step S1102). The propagation compensation unit 601 performs propagation channel compensation using the propagation channel estimation value estimated by the propagation channel estimation unit 504 (step S 1103).

Next, the process is performed on each packet included in the reception signal. That is, processes (step S1104 to S1108) of a loop L1 for the packets included in the reception signal is performed. The signal subjected to the propagation channel compensation in step S1103 is processed by the de-interleaver unit 602 and the de-spreading unit 606. Then, the demodulation process and the rate matching process are performed by the demodulation unit 607 and the rate matching unit 608, respectively (step S1105). Subsequently, it is determined whether the packets are initially transmitted in the reception packet management unit 509 (step S1106). When it is determined that the packets are initially transmitted ("Yes" in step S 1106), the decoding unit 610 performs a decoding process using the bit LLR which is the result of the demodulation and rate matching processes (step S 1107).

Next, the processes (steps S1109 to S1119) of a loop L2 for the repetitive interference cancellation process are performed. First, the respective initial transmission packets included in the reception signal are processed. That is, the processes (steps S1110 to S1112) of a loop L3 for the initial transmission packets included in the reception signals are performed. The code channel replica generation unit 511 first generates the code channel replica of each initial transmission packet from the coded bit LLR (step S1111).

Next, the detection process from the second time is performed on the respective initial transmission packets included in the reception signals. That is, the processes (steps S1113 to S1118) of a loop L4 for the initial transmission packets included in the reception signal are performed. That is, the code channel replica (MCI replica) in the code channel excluding the own code channel generated in step S1111 is cancelled by the subtraction unit 605 (step S1114). Subsequently, the propagation channel compensation unit 601 performs the propagation channel compensation on the remaining signal (step S1115). Subsequently, the demodulation process and the rate matching process are performed by the demodulation unit 607 and the rate matching unit 608, respectively (step S1116). Subsequently, the decoding process is performed by the decoding unit 610 (step S1117) to extract the information bits from the initial transmission packets included in the reception signal. In this case, it is preferable that the replica of the retransmission packet is also cancelled when the code channel replica is cancelled in step S 1114.

Meanwhile, when the packets are retransmitted ("No" in step S 1106), it is first determined whether the retransmission of the packets is performed the first time or the second and later times in the reception packet management unit 509 (step S 1120). When the packets are retransmitted the first time ("No" in step S 1120), the bit LLR subjected to the demodulation process and the rate matching process is stored in the bit LLR storage unit 512 (step S1122). On the other hand, when the packets are retransmitted the second and later times ("Yes" in step S1120), the bit LLR subjected to the demodulation process and the rate matching process and the bit LLR stored in the bit LLR storage unit 512 are synthesized by the synthesis unit 609 (step S1121). Subsequently, the synthesized bit LLR is stored in the bit LLR storage unit 512 (step S 1122).

Here, the bit LLR subjected to the demodulation process and the rate matching process is stored in the bit LLR storage unit 512 at the retransmission time, but the present invention is not limited thereto. For example, the bit LLR (the bit LLR after step S1116) subjected to the demodulation process and the rate matching process after the repetitive interference cancellation may be stored in the bit LLR storage unit 512.

When the decoding process can be performed only in the retransmission packets, the bit LLR may be decoded in step S 1107 after step S 1122 as shown in FIG. 12 or the decoding process in step S1107 may be omitted. Alternatively, when the decoding process is not performed only in the retransmission packets, the decoding process in step S 1107 may be omitted.

The bit LLR stored in the bit LLR storage unit 512 is used for the process of extracting the information bits from the initial transmission packets included in the previously received signal, which includes the initial transmission packets corresponding to the retransmission packets.

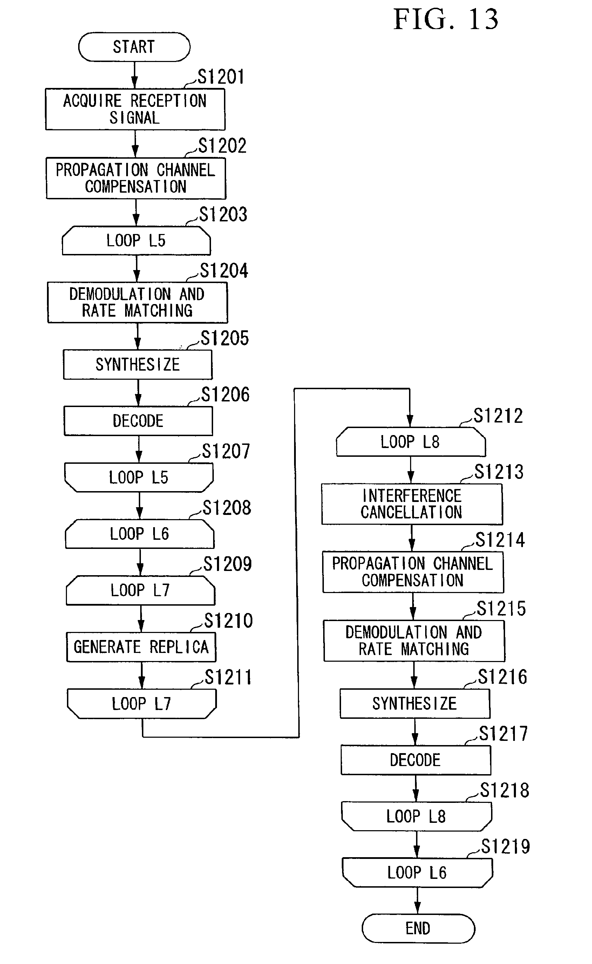

FIG. 13 is a flowchart illustrating an example of the process of extracting the information bits from the initial transmission packets included in the previously received signals, including the initial transmission packets corresponding to the retransmission packets and the control performed by the reception packet management unit 509 (FIG. 6).

First, the interference canceller unit 510 acquires the previously received signal including the initial transmission packet corresponding to the retransmission packet from the reception signal storage unit 508 (step S1201). Subsequently, the propagation channel compensation unit 601 performs the propagation channel compensation using the propagation channel estimation value which is stored in the propagation channel estimation value storage unit 505 and is obtained upon receiving the reception signal (step S1202). The reception signal subjected to the propagation channel compensation may be stored. In this case, such propagation channel compensation may not be performed.

Next, the processes (steps S1203 to S1207) of a loop L5 for the initial transmission packets corresponding to the retransmission packets are performed. For the initial transmission packets, the signals subjected to the propagation channel compensation are first processed by the de-interleaver unit 602 and the de-spreading unit 606. Subsequently, the demodulation process and the rate matching process are performed by the demodulation unit 607 and the rate matching unit 608, respectively (step S1204) to obtain the coded bit LLR.

Next, the coded bit LLR obtained in step S1204 and the coded bit LLR (the bit LLR stored in step S1122 of FIG. 12) of the retransmission packet corresponding to the initial transmission packet are synthesized by the synthesis unit 609 (step S1205). Subsequently, the decoding unit 610 performs a decoding process using the coded bit LLR obtained in the synthesis process (step S1206).

Next, the repetitive interference cancellation process is performed using the previously received signal. That is, the processes (steps S1208 to S1219) of a loop L6 are performed. The respective initial transmission packets included in the previously received signals are first processed. That is, the processes (steps S1209 to S1211) of a loop L7 for the initial transmission packets included in the reception signal are performed. The code channel replica generation unit 511 first generates the code channel replica of each initial transmission packet from the coded bit LLR (e.g., the coded bit LLR obtained through the synthesis in step S1205).

Next, the detection process from the second and later times is performed on the initial transmission packets included in the previously received signal. That is, the processes (steps S 1212 to S 1218) of a loop L8 for the initial transmission packets included in the reception signal are performed. That is, the code channel replica in the code channel excluding the own code channel generated in step S 1210 is cancelled by the subtraction unit 605 (step S1213). Subsequently, the propagation channel compensation unit 601 performs the propagation channel compensation process on the remaining signals (step S1214). Then, the demodulation process and the rate matching process are performed by the demodulation unit 607 and the rate matching unit 608, respectively (step S1215), and the coded bit LLR is calculated.

Subsequently, the calculated coded bit LLR and the coded bit LLR (the coded bit LLR stored in step S 1122 of FIG. 12) of the retransmission packets are synthesized by the synthesis unit 609 (step S1216). The decoding unit 610 performs a decoding process using the synthesized coded bit LLR (step S1217). In this way, the information bits are extracted from the initial transmission packets included in the previously received signal. In this case, it is preferable that the replica of the retransmission packet is also cancelled when the code channel replica is cancelled in step S1213.

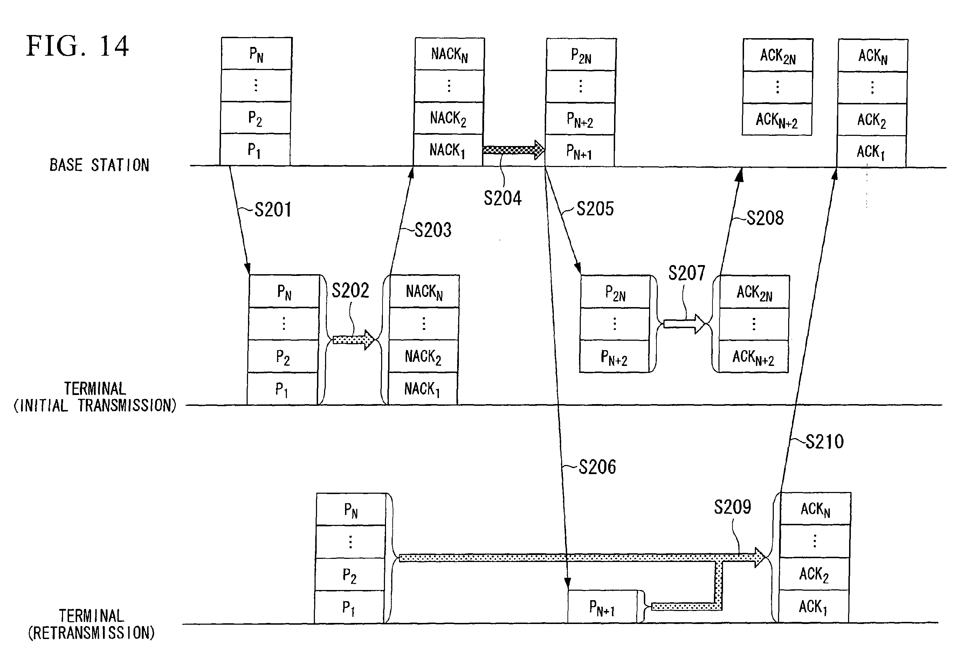

FIG. 14 is a diagram illustrating an exemplary flow of a series of processes of the detection of the reception data, the report of the success/failure information, the retransmission, and the re-detection of the reception data.
First, a base station serving as a transmission device multiplexes signals $P_1$ to $P_N$, which are initial transmission packets, and transmits a resultant signal as a downlink data signal to a terminal, which is a reception device, via a downlink (step S201). The terminal receiving the signal stores the reception signal in which the signals $P_1$ to $P_N$ are multiplexed and performs an interference cancellation process and a data detection process (step S202). Hereinafter, a case where errors occur in all the packets of the signals $P_1$ to $P_N$ will be described. The terminal generates a signal including success/failure information ($NACK_1$ to $NACK_N$) for reporting, to the base station, that the errors occur in the packets of signals $P_1$ to $P_N$. Subsequently, the terminal transmits the generated signal as an uplink success/failure information signal to the base station via an uplink (step S203).

The base station receiving the success/failure information signal generates a retransmission packet (signal $P_{N+1}$) for the packet (signal $P_1$) for which the NACK is returned (step S204). Subsequently, the base station multiplexes the generated retransmission packet (signal $P_{N+1}$) with other packets (signals $P_{N+2}$ to $P_{2N}$) of the downlink and transmits a resultant signal as a downlink data signal to the terminal (steps S205 and S206). The base station may generate and transmit the retransmission packets for some of the packets for which the NACK is returned.

The terminal receiving the downlink data signal performs the interference cancellation process and the data detection process on the signals $P_{N+2}$ to $P_{2N}$. Hereinafter, a case where no error occurs in any of the packets of the signals $P_{N+2}$ to $P_{2N}$ will be described.
The terminal generates a signal including success/failure information ($ACK_{N+2}$ to $ACK_{2N}$) for reporting, to the base station, that no error occurs in the packets of the signals $P_{N+2}$ to $P_{2N}$ (step S207). The terminal transmits the generated signal as an uplink success/failure information signal to the base station via the uplink (step S208). In a system in which the ACK is not reported, the ACK may not be transmitted.
The terminal performs the interference cancellation process and the data detection process using the demodulation result of the retransmission packet (signal $P_{N+1}$) and the reception signal in which the stored signals $P_1$ to $P_N$ are multiplexed (step S209).

Here, in the interference cancellation process, detection accuracy is improved by removing the replicas of the other previously multiplexed packets in advance. That is, the detection accuracy of the signal $P_1$ is improved in comparison with the detection time of the initial transmission by synthesizing the retransmission packet (synthesizing the signal $P_1$ as the signal packet with the signal $P_{N+1}$ as the retransmission packet). With the improvement in the accuracy of the replica of the signal $P_1$, the detection accuracy of the signals $P_2$ to $P_N$ is also improved.

In this way, since the quality (for example, an error rate) of both the initial transmission packet (signal $P_1$) corresponding to the retransmission packet (signal $P_{N+1}$) and the signal multiplexed in the signal $P_1$ is improved, there is a possibility that the success/failure result is different from the result of the initial transmission. Hereinafter, a case where no error occurs in any of the packets of the signals $P_1$ to $P_N$ will be described.

The terminal generates a signal including the success/failure information ($ACK_1$ to $ACK_N$) for reporting, to the base station, that no error occurs in any of the packets of the signals $P_1$ to $P_N$ and transmits the generated signal as an uplink success/failure information signal to the base station via the uplink (step S210).

It is not necessary for the base station receiving the $ACK_1$ to $ACK_N$ to subsequently retransmit signals corresponding to the packets (signals $P_1$ to $P_N$). As a consequence, the error in the packets (signals $P_1$ to $P_N$) can be reduced by retransmitting the signal $P_{N+1}$ corresponding to the signal $P_1$. Therefore, the data can be detected in the packets (signals $P_1$ and $P_N$) without retransmission corresponding to the packets (signals $P_2$ to $P_N$).

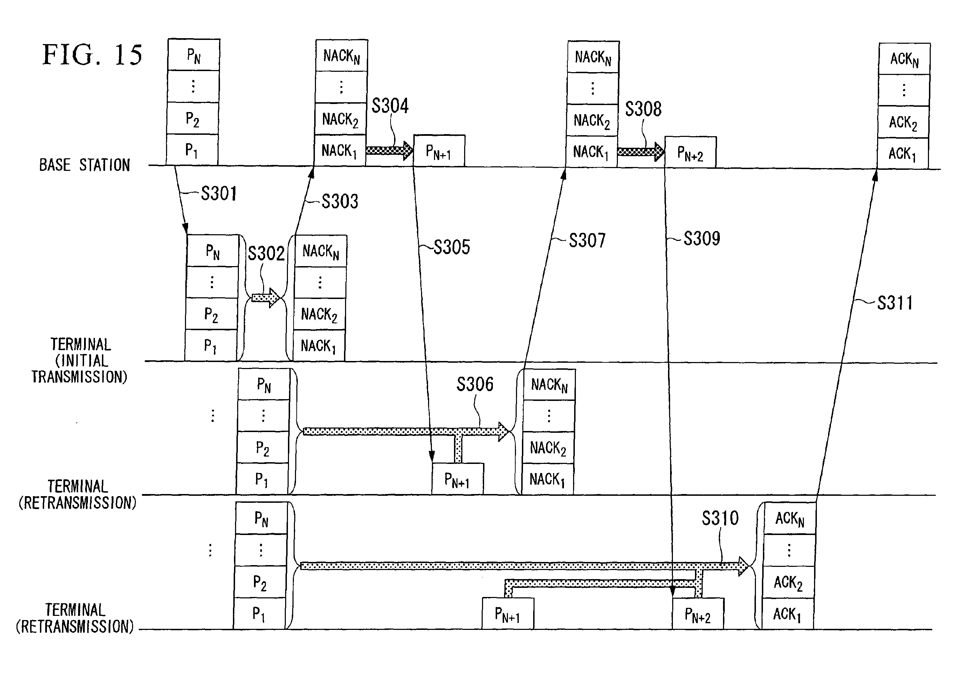

FIG. 15 is a diagram illustrating another exemplary flow of a series of processes of the detection of the reception data, the report of the success/failure information, the retransmission, and the re-detection of the reception data.

The base station first multiplexes signals $P_1$ to $P_N$, which are initial transmission packets, and transmits a resultant signal as a downlink data signal to a terminal via a downlink (step S301). The terminal receiving the signals stores the reception signal in which the signals $P_1$ to $P_N$ are multiplexed. Then, the terminal performs the interference cancellation process and the data detection process. Hereinafter, a case where errors occur in all of the packets of the signals $P_1$ to $P_N$ will be described. The terminal generates a signal including success/failure information ($NACK_1$ to $NACK_N$) for reporting, to the base station, that the errors occur in the packets of signals $P_1$ to $P_N$ (step S302). Subsequently, the terminal transmits the generated signal as an uplink success/failure information signal to the base station via an uplink (step S303).

The base station receiving the uplink success/failure information signal generates a retransmission packet (signal $P_{N+1}$) for the packet (signal $P_1$) for which the NACK is returned (step S304). Subsequently, the base station multiplexes the generated signal as a downlink data signal with other packets of the downlink and transmits a resultant signal to the terminal (step S305). The base station may generate and transmit retransmission packets for some of the packets for which the NACK is returned. Since a description of the other multiplexed packets is the same as in FIG. 14, a description thereof is omitted.

The terminal receiving the downlink data signal stores the demodulation result of the retransmission packet (signal $P_{N+1}$). The terminal performs the interference cancellation process and the data detection process using the demodulation result of the signal $P_{N+1}$ and the stored reception signal in which the signals $P_1$ to $P_N$ are multiplexed. Hereinafter, a case where errors occur in all of the packets of the signals $P_1$ to $P_N$ will be described.

The terminal generates a signal including the success/failure information ($NACK_1$ to $NACK_N$) for reporting, to the base station, that the errors occur in the packets of signals $P_1$ to $P_N$ (step S306). Subsequently, the terminal transmits the generated signal as an uplink success/failure information signal to the base station via the uplink (step S307). Here, the case where the success/failure information ($NACK_1$ to $NACK_N$) is transmitted again has been described. However, since the terminal reports the success/failure information for the initial transmission packets to the base station, the success/failure information after the second and later times may not necessarily be transmitted to the base station.

In this case, the base station serving as the transmission device may regard the NACK as being received as long as the ACK is not returned, to perform the process. When the success/failure information after the second and later times is not transmitted to the base station, overhead of the uplink can be reduced.

The base station receiving the uplink success/failure information signal generates a second retransmission packet (signal $P_{N+2}$) for the packet (signal $P_1$) for which the NACK is returned (step S308). Subsequently, the base station multiplexes the generated signal with another downlink packet and transmits the generated signal to the terminal (step S309).

The terminal receiving the downlink signal synthesizes the demodulation result of the retransmission packet (signal $P_{N+2}$) with the demodulation result of the stored packet (signal $P_{N+1}$). Then, the terminal performs the interference cancellation process and the data detection process using the synthesis result and the reception signal in which the stored signals $P_1$ to $P_N$ are multiplexed. Hereinafter, a case where no error occurs in any of the packets of the signals $P_1$ to $P_N$ will be described.

The terminal generates a signal including the success/failure information ($ACK_1$ to $ACK_N$) for reporting, to the base station, that no error occurs in any of the packets of the signals $P_1$ to $P_N$ (step S310). Subsequently, the terminal transmits the generated signal as an uplink success/failure information signal to the base station via the uplink (step S311).

It is not necessary for the base station receiving the $ACK_1$ to $ACK_N$ to subsequently perform retransmission corresponding to the packets (signals $P_1$ to $P_N$). As a consequence, the errors in the packets (signals $P_1$ to $P_N$) can be reduced by retransmitting the signal $P_{N+1}$ and the signal $P_{N+2}$ corresponding to the signal $P_1$. Therefore, the data can be detected in the packets (signals $P_1$ and $P_N$) without performing retransmission corresponding to the packets (signals $P_2$ to $P_N$).

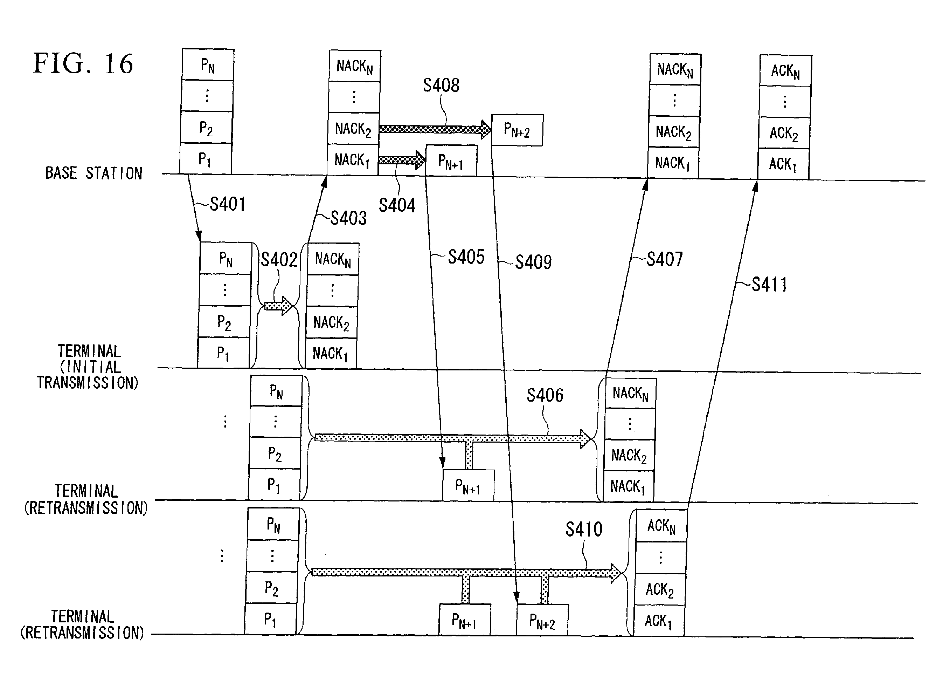

FIG. 16 is a diagram illustrating still another exemplary flow of a series of processes of the detection of the reception data, the report of the success/failure information, the retransmission, and the re-detection of the reception data. A base station first multiplexes signals $P_1$ to $P_N$, which are initial transmission packets, and transmits a resultant signal as a downlink data signal to a terminal via the downlink (step S401). The terminal receiving the signals stores the reception signal in which the signals $P_1$ to $P_N$ are multiplexed. Then, the terminal performs an interference cancellation process and a data detection process. Hereinafter, a case where errors occur in all packets of the signals $P_1$ to $P_N$ will be described.

The terminal generates a signal including success/failure information ($NACK_1$ to $NACK_N$) for reporting, to the base station, that the errors occur in the packets of signals $P_1$ to $P_N$ (step S402). Subsequently, the terminal transmits the generated signal as an uplink success/failure information signal to the base station via the uplink (step S403). The base station receiving the uplink success/failure information signals generates a retransmission packet (signal $P_{N+1}$) for the packet (signal $P_1$) for which the NACK is returned (step S404). Subsequently, the base station multiplexes the generated signal as the downlink data signal with other packets of the downlink and transmits the signal to the terminal (step S405). The base station may generate and transmit retransmission packets for some of the packets for which the NACK is returned. Since a description of the other multiplexed packets is the same as in FIG. 14, a description thereof is omitted.

The terminal receiving the downlink signal stores the demodulation result of the retransmission packet (signal $P_{N+1}$). The terminal performs the interference cancellation process and the data detection process using the demodulation result of the signal $P_{N+1}$ and the reception signals in which the stored signals $P_1$ to $P_N$ are multiplexed. Hereinafter, a case where errors occur in all the packets of the signals $P_1$ to $P_N$ will be described.

The terminal generates a signal including success/failure information ($NACK_1$ to $NACK_N$) for reporting, to the base station, that the errors occur in the packets of signals $P_1$ to $P_N$ (step S406). Subsequently, the terminal transmits the generated signal as an uplink success/failure information signal to the base station via the uplink (step S407). Here, the case where the success/failure information ($NACK_1$ to $NACK_N$) is again transmitted from the terminal to the base station has been described. However, since the terminal reports the success/failure information for the initial transmission packets to the base station in step S402, the success/failure information from the second and later times may not necessarily be transmitted.

After transmitting the retransmission packet (signal $P_{N+1}$) to the terminal, the base station generates a retransmission packet (signal $P_{N+2}$) for the packet (signal $P_1$) for which the NACK is returned (step S408). Subsequently, the base station multiplexes the generated signal with another downlink packet and transmits the generated signal as a downlink data signal to the terminal (step S409). The terminal receiving the downlink signal performs the interference cancellation process and the data detection process using the demodulation result of the retransmission packet (signal $P_{N+2}$), the stored signal $P_{N+1}$, and the stored reception signals in which the signals $P_1$ to $P_N$ are multiplexed. Hereinafter, a case where no error occurs in any of the packets of the signals $P_1$ to $P_N$ will be described.

The terminal generates a signal including success/failure information ($ACK_1$ to $ACK_N$) for reporting, to the base station, that no error occurs in any of the packets of the signals $P_1$ to $P_N$ (step S410). Subsequently, the terminal transmits the generated signal as an uplink success/failure information signal to the base station via the uplink (step S411). It is not necessary for the base station receiving the $ACK_1$ to $ACK_N$ to subsequently perform retransmission corresponding to the packets (signals $P_1$ to $P_N$). As a consequence, the errors in the packets (signals $P_1$ to $P_N$) can be reduced by retransmitting the signal $P_{N+1}$ corresponding to the signal $P_1$ and the signal $P_{N+2}$ corresponding to the signal $P_2$. Therefore, the data can be detected in the packets (signals $P_1$ and $P_N$) without performing retransmission corresponding to the packets (signals $P_3$ to $P_N$).

Next, packet information managed by the reception packet management unit 509 will be described. The reception packet management unit 509 stores information (for example, the number corresponding to a reception frame) designating a reception signal (reception frame) received at each reception time, information (for example, the number corresponding to a packet) designating a packet included in each reception signal, information indicating the number of retransmissions of each packet, and information designating the bit LLR of the retransmission packet corresponding to each packet.

When the reception device 500 receives the reception signal, the reception packet management unit 509 notifies the reception signal storage unit 508 and the propagation channel estimation value storage unit 505 of information designating the reception signal. The reception signal storage unit 508 stores the reception signal itself in association with the information designating the reception signal. The propagation channel estimation value storage unit 505 stores the propagation channel estimation value corresponding to the reception signal in association with the information designating the reception signal. When the packet included in the reception signal stored upon receiving the retransmission packet is re-detected, the reception packet management unit 509 notifies the reception signal storage unit 508 and the propagation channel estimation value storage unit 505 of the information designating the reception signal including the initial transmission packet corresponding to the retransmission packet.

When the information designating the reception signal is reported from the reception packet management unit 509, the reception signal storage unit 508 outputs the reception signal associated with this information to the interference canceller unit 510. When the information designating the reception signal is reported from the reception packet management unit 509, the propagation channel estimation value storage unit 505 outputs the propagation channel estimation value associated with this information to the interference canceller unit 510.

When the reception device 500 receives the reception signal, the reception packet management unit 509 refers to the number of retransmissions of the packet included in the reception signal. When there is a packet for which the number of retransmissions is 2 or more, the reception packet management unit 509 notifies the bit LLR storage unit 512 of information designating the bit LLR of the retransmission packet corresponding to this packet.

The bit LLR storage unit 512 outputs the stored bit LLR to the interference canceller unit 510 based on the reported information. When there is a packet for which the number of retransmissions is one, the reception packet management unit 509 generates information designating the bit LLR of the retransmission packet corresponding to this packet and notifies the bit LLR storage unit 512 of the information. The bit LLR storage unit 512 stores the bit LLR output from the interference canceller unit 510 in association with the reported information.

The reception packet management unit 509 notifies the interference canceller unit 510 of the information designating the packet included in the reception signal and the information indicating the number of retransmissions of each packet.

The interference canceller unit 510 determines a pattern used for the de-puncturing process in the rate matching unit 608 from the information designating the packet included in the reception signal and the information indicating the number of retransmissions of each packet.

When the number of retransmissions is 0 (that is, initial transmission), the synthesis unit 609 does not perform synthesis and outputs the signal output from the rate matching unit 608 to the decoding unit 610 without change. When the number of retransmissions is 1, the synthesis unit 609 does not perform the synthesis process and outputs the signals output from the rate matching unit 608 to the bit LLR storage unit 512 without change.

When the number of retransmissions is 2 or more, the synthesis unit 609 synthesizes the signal output from the rate matching unit 608 with the signal stored in the bit LLR storage unit 512, and outputs a resultant signal to the bit LLR storage unit 512.

When the packets included in the reception signal stored upon storing the retransmission packets are re-detected, the reception packet management unit 509 notifies the bit LLR storage unit 512 of the information designating the bit LLR of the retransmission packets corresponding to the packets. The bit LLR storage unit 512 outputs the bit LLR associated with the reported information to the interference canceller unit 510.

When the packets included in the reception signal stored upon storing the retransmission packets are re-detected, the reception packet management unit 509 notifies the interference canceller unit 510 of the information designating the packets included in the reception signal to be re-detected and the information designating the number of retransmissions. When the interference canceller unit 510 is notified, the synthesis unit 609 performs bit LLR synthesis on the packet for which the number of retransmissions is 2 or more and does not perform the synthesis on the packet for which the number of retransmissions is 0.

Thus, according to this embodiment, the plurality of initial transmission packets are multiplexed and transmitted from the transmission device 100 to the reception device 500, and the data is detected in the reception device 500 while removing the interference (other multiplexed packets). When the data detection fails, the retransmission packets are transmitted from the transmission device 100 to the reception device 500. When the detection of the plurality of multiplexed and initially transmitted packets fails and the retransmission packets corresponding to some of the packets are transmitted, not only some of the packets but also the other initial transmission packets for which initial detection has failed are re-detected. When the detection is successful, information indicating the success of the detection is transmitted to the transmission device 100. In this way, since the number of downlink retransmissions packets can be reduced, throughput is improved.

[Second Embodiment]

In the first embodiment, the case where the repetitive parallel MCI canceller is used in the reception device 500 has been described. In a second embodiment, a case where a repetitive successive MCI canceller is used in the reception device will be described.

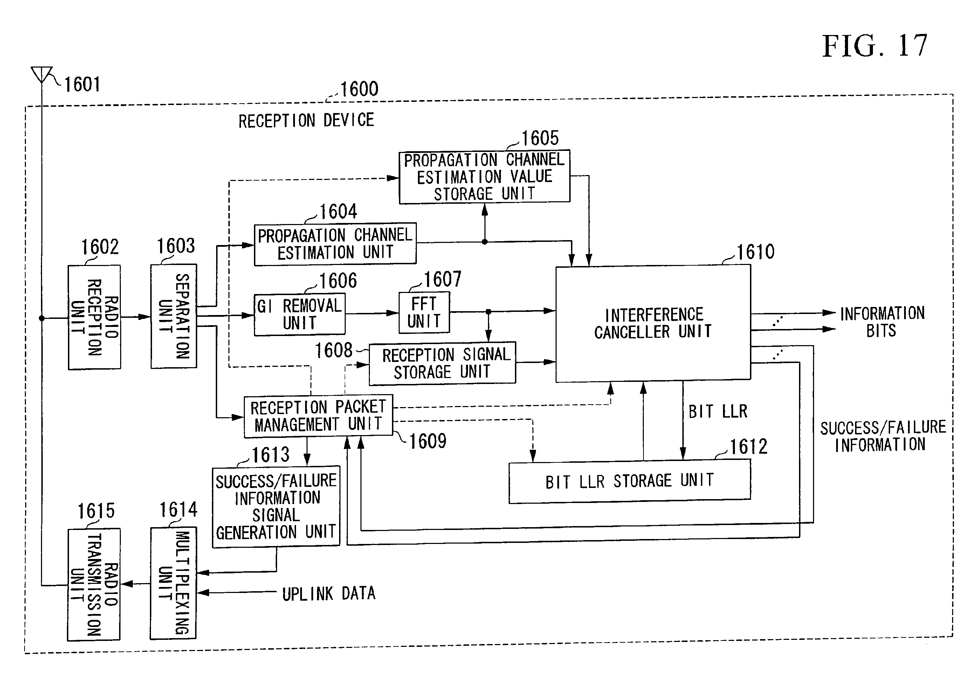

FIG. 17 is a schematic block diagram illustrating the configuration of a reception device 1600 according to the second embodiment of the present invention. Since a transmission device can be realized with the same configuration as the transmission device 100 shown in FIG. 2, a description thereof will be omitted.

The reception device 1600 includes an antenna 1601, a radio reception unit 1602, a separation unit 1603, a propagation channel estimation unit 1604, a propagation channel estimation value storage unit 1605, a GI removal unit 1606, an FFT unit 1607, a reception signal storage unit 1608, a reception packet management unit 1609, an interference canceller unit 1610, a bit LLR storage unit 1612, a success/failure information signal generation unit 1613, a multiplexing unit 1614, and a radio transmission unit 1615.

Since all of the blocks except for the interference canceller unit 1610 are the same as those with the same names shown in FIG. 6, the process performed by the interference canceller unit 1610 will be described below.

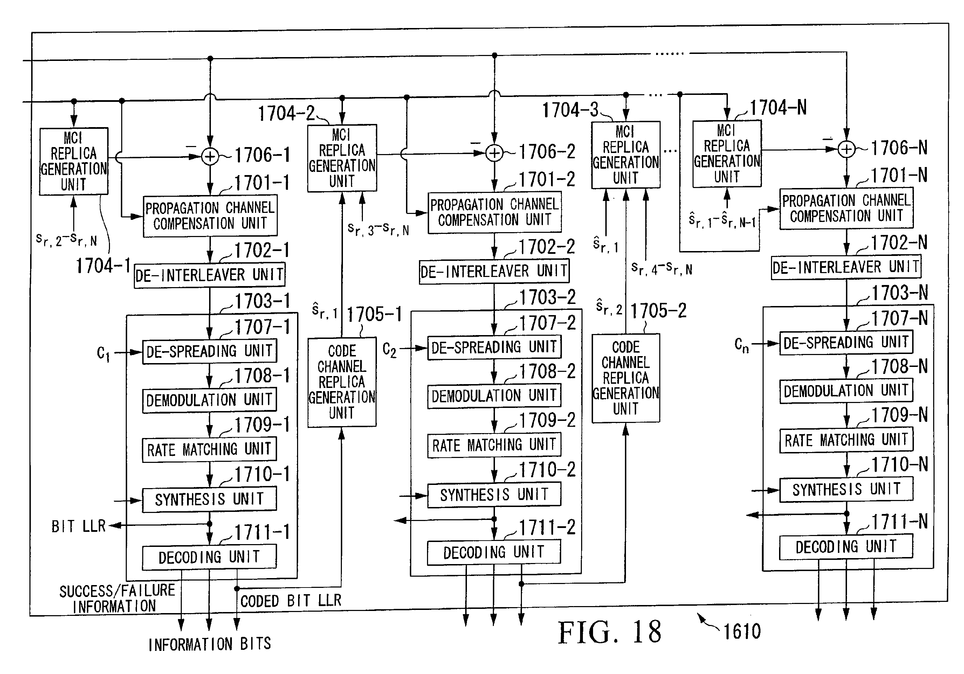

FIG. 18 is a schematic block diagram illustrating the configuration of the interference canceller unit 1610 of the reception device 1600 according to the second embodiment of the present invention. Hereinafter, a case where the signals of the code channels corresponding to the spreading codes $C_1$ to $C_N$ are detected in an order of $C_1$, $C_2$, $C_3$, to $C_N$ will be described.
A series of processes in the interference canceller unit 1610 are repeatedly executed. The number of repetitions is one or more.

The interference canceller unit 1610 includes propagation channel compensation units 1701-1 and 1701-2 to 1701-N, de-interleaver units 1702-1 and 1702-2 to 1702-N, code separation units 1703-1 and 1702-3 to 1703-N, MCI replica generation units 1704-1, 1704-2, and 1704-3 to 1704-N, code channel replica generation units 1705-1 and 1705-2 to 1705-N (not shown), and subtraction units 1706-1 and 1706-2 to 1706-N.
The code separation unit 1703-1 includes a de-spreading unit 1707-1, a demodulation unit 1708-1, a rate matching unit 1709-1, a synthesis unit 1710-1, and a decoding unit 1711-1. The code separation units 1703-2 to 1703-N have the same configuration as the code separation unit 1703-1.
The plurality of blocks with the same function are repeatedly described to facilitate the description. However, only one block may be included and the function of the block may be used several times.

Each block in the interference canceller unit 1610 performs the same process as each block with the same name in the interference canceller unit 510 shown in FIG. 7. The code channel replica generation units 1705-1 to 1705-N perform the same process as the code channel replica generation unit 511 in the reception device 500. Hereinafter, a difference between the process of the interference canceller unit 1610 and the process of the interference canceller unit 510 will be described.

In the first embodiment, the interference canceller unit 510 detects the signals of the code channels corresponding to spreading codes $C_1$ to $C_N$, and the code channel replica generation unit 511 generates the code channel replicas corresponding to the spreading codes $C_1$ to $C_N$. The interference canceller unit 510 uses the generated code channel replicas for interference cancellation on the next repetition.
In this embodiment, however, the interference canceller unit 1610 includes the code channel replica generation units 1705-1 to 1705-N. Whenever the signal detection of several code channels corresponding to the spreading codes $C_1$ to $C_N$ ends, the code channel replica generation units 1705-1 to 1705-N generate and update the code channel replicas. When interference is removed in the code channels to be detected the next time, the generated or updated code channel replicas are used.
That is, in the first embodiment, the code channel replicas are updated after the signal detection of all the code channels of the spreading codes $C_1$ to $C_N$. In this embodiment, however, the code channel replica is updated after the signal detection of one code channel. Therefore, the code channel replica can be generated with high accuracy.

The same HARQ process as in the first embodiment can be performed even in a system in which the interference cancellation process is performed in the reception device 1600.
Thus, in this embodiment, the plurality of initial transmission packets are multiplexed and transmitted from the transmission device 100 (FIG. 2) to the reception device 1600 (FIG. 17). The reception device 1600 detects the data while removing the interference (other multiplexed packets). When the data detection fails, the retransmission packet is transmitted from the transmission device 100 to the reception device 1600. When the detection of the plurality of multiplexed initial transmission packets fails and the retransmission packets corresponding to some packets are transmitted from the transmission device 100 to the reception device 1600, the reception device 1600 detects both the some packets and the other initial transmission packets for which the initial detection has failed. On the other hand, when the data detection is successful, the information indicating the detection success is transmitted to the transmission device 100. In this way, since the number of downlink retransmission packets can be reduced, throughput is improved.

[Third Embodiment]

In the first and second embodiments, the case where the packets are multiplexed by the spreading codes and the multi-code interference (MCI) is removed by the canceller has been described. In the present embodiment, a case where packets are spatially multiplexed using multiple input multiple output (MIMO) and another stream signal are removed by an interference canceller will be described. In addition, a case where a repetitive successive interference canceller (SIC) is used as the interference canceller will be described.

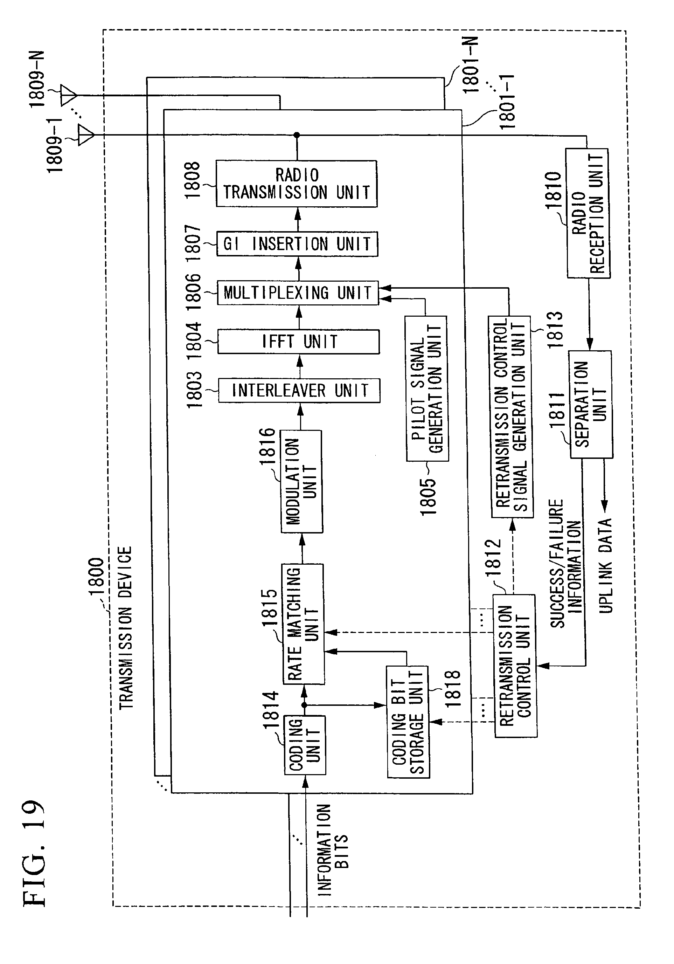

FIG. 19 is a schematic block diagram illustrating the configuration of a transmission device 1800 according to a third embodiment of the present invention. The transmission device 1800 includes stream signal generation units 1801-1 to 1801-N (where N is the number of streams), antennas 1809-1 to 1809-N, a radio reception unit 1810, a separation unit 1811, a retransmission control unit 1812, and a retransmission control signal generation unit 1813.

The stream signal generating units 1801-1 to 1801-N each include a coding unit 1814, a rate matching unit 1815, a modulation unit 1816, an interleaver unit 1803, an IFFT unit 1804, a pilot signal generation unit 1805, a multiplexing unit 1806, a GI insertion unit 1807, a radio transmission unit 1808, and a coded bit storage unit 1818.

The stream signal generating unit 1801-1 generates a transmission data signal of each stream from the information bits. First, the coding unit 1814 performs a channel coding process on an information bit sequence and outputs the coded bit sequence to the rate matching unit 1815 and the coded bit storage unit 1818. Here, it is preferable that the coding unit 1814 uses coding with an error correction capability, such as convolution coding or Read-Solomon coding, as channel coding. More preferably, the coding unit 1814 may use coding with a high error correction capability, such as turbo coding or LDPC coding.

The rate matching unit 1815 performs a puncturing (bit removal) process, a bit padding (bit insertion) process, or a bit repetition process on coded bits output from the coding unit 1814 or coded bits output from the coded bit storage unit 1818 in accordance with the retransmission number output from the retransmission control unit 1812. The rate matching unit 1815 may perform an interleaving process. An example of the puncturing process will be described below as an example of a rate matching process.

The coded bit storage unit 1818 stores the coded bit sequence output from the coding unit 1814. Moreover, the stored coded bit sequence is erased under control of the retransmission control unit 1812.

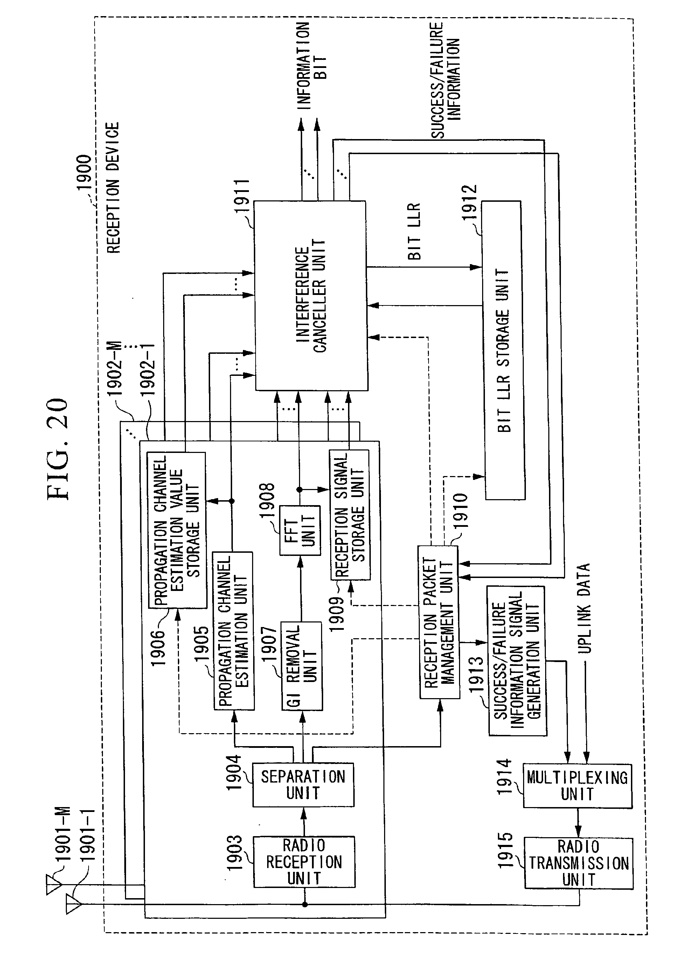

The modulation unit 1816 modulates the coded bit (punctured coded bit) sequence output from the rate matching unit 1815 and outputs the modulated coded bit sequence to the interleaver unit 1803. The modulation unit 1816 may use a modulation method such as PSK or QAM. More preferably, a modulation method suitable for the propagation channel between the transmission device 1800 and the reception device 1900 (see FIG. 20) is used.

The interleaver unit 1803 performs an interleaving process, such as a symbol interleaving (frequency interleaving) process, on the signal output from the modulation unit 1816 and outputs the interleaved signal to the IFFT unit 1804.

The IFFT unit 1804 performs an IFFT process on the signals arranged in a frequency direction to convert the signals into signals in a time domain and outputs the signals to the multiplexing unit 1806.

The pilot signal generation unit 1805 generates a pilot signal used for propagation channel estimation in the reception device 1900 and outputs the pilot signal to the multiplexing unit 1806. Preferably, the pilot signal generation unit 1805 generates a pilot signal orthogonal to each stream.

The retransmission control signal generation unit 1813 generates a signal (retransmission control signal) for notifying the reception device 1900 of the number of retransmissions of the data signal of each stream reported from the retransmission control unit 1812, and then outputs the generated signal to the multiplexing unit 1806. Here, the retransmission control signal is multiplexed in the stream in the stream signal generating unit 1801-1. However, the present invention is not limited thereto. The retransmission control signal may be multiplexed in any stream (or plural streams).

The multiplexing unit 1806 multiplexes the data signal output from the IFFT unit 1804, the pilot signal output from the pilot signal generation unit 1805, and the retransmission control signal output from the retransmission control signal generation unit 1813, and then outputs the multiplexed signal to the GI insertion unit 1807.

The GI insertion unit 1807 adds a guard interval to the signal output from the multiplexing unit 1806 and outputs the signal to the radio transmission unit 1808.

The radio transmission unit 1808 performs a process such as an up-converting process on the signal output from the GI insertion unit 1807 and outputs the resultant signal to the reception device 1900 via the antenna 1809-1. The other stream signal generation units 1801-2 to 1801-N and the antennas 1809-2 to 1809-N perform the same processes as the stream signal generation unit 1801-1 and the antenna 1809-1.

FIG. 20 is a schematic block diagram illustrating the configuration of a reception device 1900 according to the third embodiment of the present invention. The reception device 1900 includes antennas 1901-1 to 1901-M (where M is the number of reception antennas), reception processing units 1902-1 to 1902-M for each antennas, a reception packet management unit 1910, an interference canceller unit 1911, a bit LLR storage unit 1912, a success/failure information signal generation unit 1913, a multiplexing unit 1914, and a radio transmission unit 1915.

The reception processing units 1902-1 to 1902-M for each antennas each include a radio reception unit 1903, a separation unit 1904, a propagation channel estimation unit 1905, a propagation channel estimation value storage unit 1906, a GI removal unit 1907, an FFT unit 1908, and a reception signal storage unit 1909.

The propagation channel estimation unit 1905 to the bit LLR storage unit 1912 are collectively called a data signal detection unit.

The signals received via the antennas 1901-1 to 1901-M are subjected to a reception process by the reception processing units 1902-1 to 1902-M for each antennas. The radio reception unit 1903 (also called a reception unit) performs a process, such as a down-converting process, on the signal received by the antennas 1901-1 to 1901-M and outputs the signal to the separation unit 1904.

The separation unit 1904 separates the signal output from the radio reception unit 1903 into a pilot signal, a retransmission control information signal, and a data signal.

The propagation channel estimation unit 1905 estimates a characteristic of a propagation channel between each of the antennas 1809-1 to 1809-N of the transmission device 1800 and each of the antennas 1901-1 to 1901-M of the reception device 1900 by use of the pilot signal separated by the separation unit 1904, and then outputs the propagation channel estimation value to the propagation channel estimation value storage unit 1906 and the interference canceller unit 1911.

The propagation channel estimation value storage unit 1906 stores the propagation channel estimation value output from the propagation channel estimation unit 1905.

The GI removal unit 1907 removes the guard interval from the data signal separated by the separation unit 1904 and outputs the signal to the FFT unit 1908.

The FFT unit 1908 performs an FFT process on the signal output from the GI removal unit 1907 to convert the signal into a signal in a frequency domain, and then outputs the signal to the reception signal storage unit 1909 and the interference canceller unit 1911.

The reception signal storage unit 1909 stores the signal in a frequency domain output from the FFT unit 1909.

The reception packet management unit 1910 gives various instructions to the interference canceller unit 1911, the bit LLR storage unit 1912, the reception signal storage unit 1909, and the propagation channel estimation value storage unit 1906 based on the retransmission control information signal separated by the separation unit 1904 and the success/failure information output from the interference canceller unit 1911. The reception packet management unit 1910 instructs the success/failure information signal generation unit 1913 to generate a success/failure information signal. The operation of the reception packet management unit 1910 will be described in detail below.

The interference canceller unit 1911 detects the information bit sequence from the signals output from the reception processing units 1902-1 to 1902-M for each antennas, while referring to the propagation channel estimation value output from the propagation channel estimation unit 1905 based on the instruction of the reception packet management unit 1910, and then outputs the success/failure information to the reception packet management unit 1910. When the bit LLR is output from the bit LLR storage unit 1912, the interference canceller unit 1911 detects the information bits from the reception signal output from the reception signal storage unit 1909 using the bit LLR and the propagation channel estimation value output from the propagation channel estimation value storage unit 1906. The operation of the interference canceller unit 1911 will be described in detail below.

The bit LLR storage unit 1912 stores the bit LLR output from the interference canceller unit 1911 based on the instruction of the reception packet management unit 1910. When the retransmission packet is multiplexed in the reception signal, the bit LLR storage unit 1912 outputs the stored bit LLR to the interference canceller unit 1911 and stores the bit LLR output from the interference canceller unit 1911 again. That is, the bit LLR storage unit 1912 replaces the stored bit LLR with the newly output bit LLR.

The success/failure information signal generation unit 1913 generates a success/failure information signal based on the instruction of the reception packet management unit 1910, and outputs the success/failure information signal to the multiplexing unit 1914.

The multiplexing unit 1914 multiplexes the success/failure information signal output from the success/failure information signal generation unit 1913 with the uplink data signal, and outputs the multiplexed signal to the radio transmission unit 1915.

The radio transmission unit 1915 (also called a report transmission unit) performs a process such as an up-converting process on the signal output from the multiplexing unit 1914, and outputs the resultant signal to the transmission device 1800 via the antenna 1901-1. Here, an example where the uplink signal is transmitted only from the antenna 1901-1 has been described, but the present invention is not limited thereto. The uplink signal may be transmitted using the plurality of antennas.

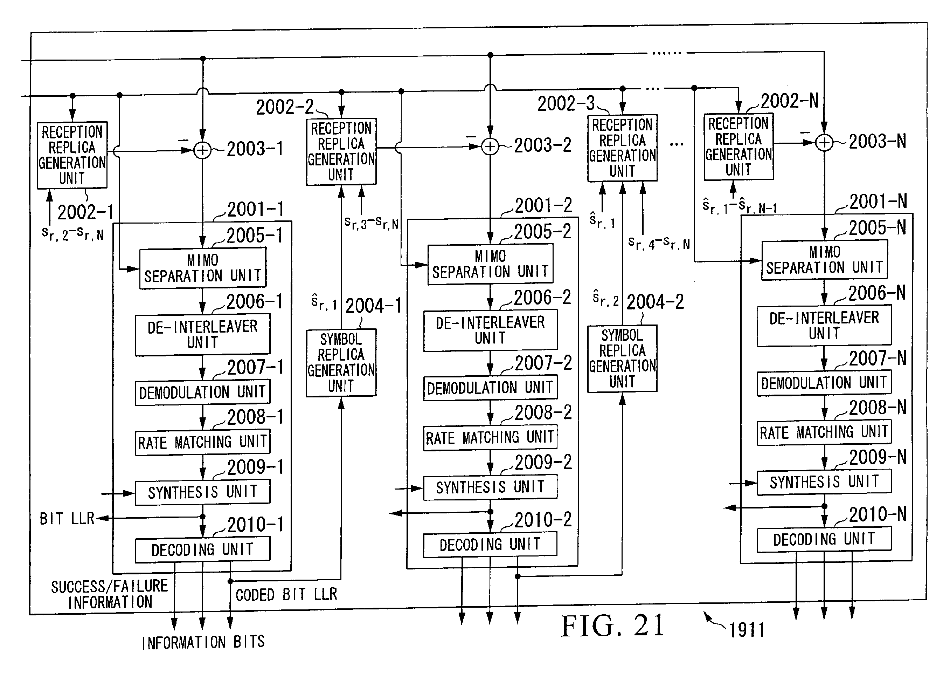

FIG. 21 is a schematic block diagram illustrating the configuration of the interference canceller unit 1911 of the reception device 1900 according to the third embodiment of the present invention. Hereinafter, a case where first to N-th streams are sequentially detected will be described. A series of processes of the interference canceller unit 1911 are repeatedly executed except for the case where all information bits could be detected with no error the first time.

The interference canceller unit 1911 includes stream detection units 2001-1 and 2001-2 to 2001-N, reception replica generation units 2002-1, 2002-2, and 2002-3 to 2002-N, subtraction units 2003-1 and 2003-2 to 2003-N, and symbol replica generation units 2004-1 and 2004-2 to 2004-N (not shown).

The stream detection unit 2001-1 includes a MIMO separation unit 2005-1 (also called a stream separation unit), a de-interleaver unit 2006-1, a demodulation unit 2007-1, a rate matching unit 2008-1, a synthesis unit 2009-1, and a decoding unit 2010-1. The stream detection units 2001-2 to 2001-N have the same configuration as the stream detection unit 2001-1.

The reception replica generation units 2002-1 to 2002-N (also called an interference signal replica generation unit) generate stream replicas (interference replicas) based on the symbol replicas excluding $S_{r,k}$ among the symbol channel replicas $S_{r,1}$ to $S_{r,N}$ output from the symbol replica generation units 2004-1 to 2004-N and the propagation channel estimation value output from the propagation channel estimation unit 1905 (or the propagation channel estimation value storage unit 1906), and then outputs the stream replicas to the subtraction units 2003-1 to 2003-N.

The first time, it is not necessary for the symbol replica generation units 2002-1 to 2002-N to generate a reception replica.

Each symbol replica during repetition is a finally generated or updated symbol replica.

The subtraction units 2003-1 to 2003-N subtract the stream replica from the output of the FFT unit 1908 (or the reception signal storage unit 1909) and output the result to the MIMO separation units 2005-1 to 2005-N.

The MIMO separation units 2005-1 to 2005-N perform MIMO stream separation on the output of the subtraction units 2003-1 to 2003-N based on the propagation channel estimation value output from the propagation channel estimation unit 1905 (or the propagation channel estimation storage unit 1906), and output the result to the de-interleaver units 2006-1 to 2006-N. Specifically, the MIMO separation units 2005-1 to 2005-N reproduce the stream data signals by maximum likelihood estimation. Alternatively, the MIMO separation units 2005-1 to 2005-N use a separation process such as a process of calculating an MMSE weight for the output of the subtraction units 2003-1 to 2003-N and multiplying the output of the subtraction units 2003-1 to 2003-N by the calculated weight.

The de-interleaver units 2006-1 to 2006-N perform a de-interleaving process on the output of the MIMO separation units 2005-1 to 2005-N and output the result to the demodulation units 2007-1 to 2007-N. It is preferable that the de-interleaving process is a process of rearranging the order rearranged by the interleaving process of the interleaver unit 1803 to return to the original order.

The demodulation units 2007-1 to 2007-N demodulate a modulated symbol sequence output from the de-interleaver units 2006-1 to 2006-N to extract the signal of each bit. Preferably, the demodulation units 2007-1 to 2007-N output the LLR of each bit to the rate matching units 2008-1 to 2008-N.

The MIMO separation units 2005-1 to 2005-N, the de-interleaver units 2006-1 to 2006-N, the demodulation units 2007-1 to 2007-N, and the rate matching units 2008-1 to 2008-N are collectively called a demodulation unit.

The rate matching units 2008-1 to 2008-N perform inverse processes of the puncturing (bit removal) process, the bit padding (bit insertion) process, or the bit repetition process performed by the rate matching unit 1815 of the transmission device 1800, and output the result to the synthesis units 2009-1 to 2009-N. That is, the rate matching units 2008-1 to 2008-N perform a bit de-puncturing (bit LLR insertion) process on the bits subjected to the puncturing process, perform a bit removal process on the bits subjected to the bit padding (bit insertion) process, and perform the bit LLR synthesis process on the bits subjected to the bit repetition process.

The synthesis units 2009-1 to 2009-N output the bit LLR output from the rate matching units 2008-1 to 2008-N to the decoding units 2010-1 to 2010-N without change, when the packets are initially transmitted or the packets are retransmitted the first time.

The MIMO separation units 2005-1 to 2005-N, the de-interleaver units 2006-1 to 2006-N, the demodulation units 2007-1 to 2007-N, the rate matching units 2008-1 to 2008-N, and the synthesis units 2009-1 to 2009-N are collectively called a signal synthesis unit.

The synthesis units 2009-1 to 2009-N synthesize and output the bit LLR (the bit LLR in the corresponding initial transmission packets) stored in the bit LLR storage unit 1812 and the bit LLR output from the rate matching units 2008-1 to 2008-N, when the packets are retransmitted from the second time.

The bit LLR output from the synthesis units 2009-1 to 2009-N is input to the decoding units 2010-1 to 2010-N. The synthesis units 2009-1 to 2009-N output the output bit LLR to the bit LLR storage unit 1812, when the packets are retransmitted.

Next, the process of transmitting the uplink signal from the reception device 1900 to the transmission device 1800 will be described.

The signal transmitted from the reception device 1900 is received in the radio reception unit 1810 (also called a report reception unit) via the antennas 1809-1 to 1809-N of the transmission device 1800 (FIG. 19). Here, the configuration in which the signal is received only via the antenna 1809-1 is described, but the present invention is not limited thereto. The signal may be received via any antenna (where a plurality of antennas is possible).

The radio reception unit 1810 performs a process such as a down-converting process on the signal received via the antenna 1809-1 and outputs the signal to the separation unit 1811.

The separation unit 1811 separates the reception signal into the uplink data and the success/failure information. The retransmission control unit 1812 prepares transmission of the retransmission packets (retransmission data signal) based on the success/failure information separated from the uplink data by the separation unit 1811.

When the success/failure information is information indicating reception failure (NACK), the retransmission control unit 1812 instructs the coded bit storage unit 1818 to output the coded bit sequence corresponding to the packet for which the NACK is returned. The retransmission control unit 1812 instructs the rate matching unit 1815 to perform the rate matching process on the coded bit sequence output from the coded bit storage unit 1818.

The rate matching process may be the same process performed at initial transmission time, but it is preferable that the rate matching process is modified according to the number of retransmissions. Moreover, the retransmission control unit 1812 notifies the retransmission control signal generation unit 1813 of information indicating the number of retransmissions of multiplexed packets. The retransmission control signal generation unit 1813 generates a signal (retransmission control signal) indicating the information reported from the retransmission control unit 1812, and outputs the generated signal to the multiplexing unit 1806.

It is preferable that the information indicating the number of retransmissions of the multiplexed packet is information indicating the number itself. However, this information may be information obtained by processing the number of retransmissions, such as information indicating whether the transmission is initial transmission or retransmission. When the success/failure information is information indicating success of the reception (ACK), the retransmission control unit 1812 instructs the coded bit storage unit 1818 to release the storage area where the coded bit sequence corresponding to the packet for which the ACK is returned is stored.

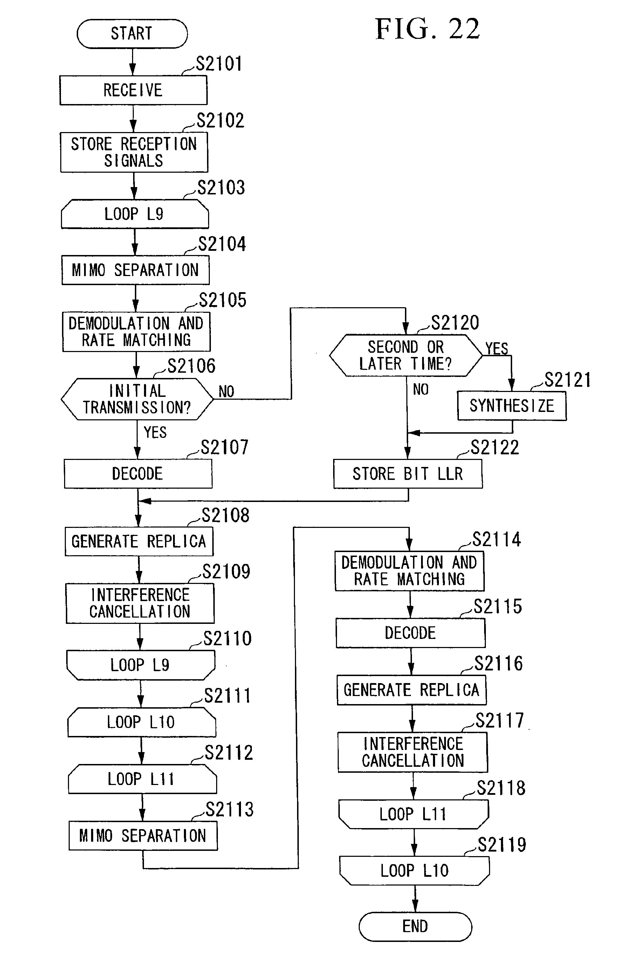

FIG. 22 is a flowchart illustrating an example of a process of extracting information bits from the initial transmission packets included in the reception signals in the reception device 1900, and control performed by the reception packet management unit 1910.

First, the signals transmitted by the transmission device 1800 are received by the radio reception unit 1903 (step S2101). Subsequently, the signals received by the radio reception unit 1903 are processed in the separation unit 1904, the GI removal unit 1907, and the FFT unit 1908, and then are stored in the reception signal storage unit 1909 (step S2102).

Next, the process is performed on each packet (stream) included in the reception signal. That is, processes (steps S2103 to S2110) of a loop L9 for the packets included in the reception signals are performed. First, the MIMO separation unit 2005 separates a MIMO stream using the propagation channel estimation value estimated by the propagation channel estimation unit 1905 (step S2104).

The signals subjected to the MIMO separation process are processed by the de-interleaver unit 2006. Then, the demodulation process and the rate matching process are performed by the demodulation unit 2007 and the rate matching unit 2008, respectively (step S2105). Subsequently, it is determined whether the packets are initially transmitted in the reception packet management unit 1910 (step S2106). When it is determined that the packets are initially transmitted ("Yes" in step S2106), the decoding unit 2010 performs a decoding process using the bit LLR which is the result of the demodulation process and the rate matching process (step S2107).

The stream replica (interference signal replica) is generated using the coded bit LLR output from the decoding unit 2010 (step S2108). Subsequently, interference (interference to the stream detected the next time) is removed from the reception signal using the interference signal replica (step S2109).

Next, the repetitive interference cancellation process is performed. That is, the processes (steps S2111 to S2119) of a loop L10 are performed. During this repetitive process, respective initial transmission packets included in the reception signal are processed. That is, processes (steps S2112 to S2118) of a loop L11 for the initial transmission packets included in the reception signals are performed. First, detection of the transmission data and removal of the interference in the stream including the transmission data as a next detection contrast are sequentially repeatedly removed.

That is, the MIMO separation is performed (step 2113). Subsequently, the decoding process and the rate matching process are performed (step 2114). Then, the decoding process is performed using the obtained bit LLR (step S2115). Next, the stream replica is generated using the coded bit LLR output from the decoding unit 2010 (step S2116). Then, the interference is removed using the stream replica (step S2117). It is preferable that the replicas of the retransmission packets are also cancelled when the stream replica is cancelled in step S2117.

Meanwhile, when the packets are retransmitted ("No" in step S2106), it is first determined whether the retransmission is performed the first time or the second and later times in the reception packet management unit 1910 (step S2120). When the packets are retransmitted the first time ("No" in step S2120), the bit LLR subjected to the demodulation process and the rate matching process is stored in the bit LLR storage unit 1812 (step S2122). On the other hand, when the packets are retransmitted the second and later times ("Yes" in step S2120), the bit LLR subjected to the demodulation process and the rate matching process and the bit LLR stored in the bit LLR storage unit 1812 are synthesized by the synthesis unit 2009 (step S2121). Subsequently, the synthesized bit LLR is stored in the bit LLR storage unit 1812 (step S2122).

Here, the bit LLR subjected to the demodulation process and the rate matching process is stored in the bit LLR storage unit 1812 at the retransmission time, but the present invention is not limited thereto. For example, the bit LLR (the bit LLR after step S2114) subjected to the demodulation process and the rate matching process after the repetitive interference cancellation process may be stored in the bit LLR storage unit 1812.

When the decoding process can be performed only with the retransmission packets, the bit LLR may be decoded in step S2107 after step S2122.

The stored bit LLR is used for the process of extracting the information bits from the initial transmission packets included in the previously received signals, including the initial transmission packets corresponding to the retransmission packets.

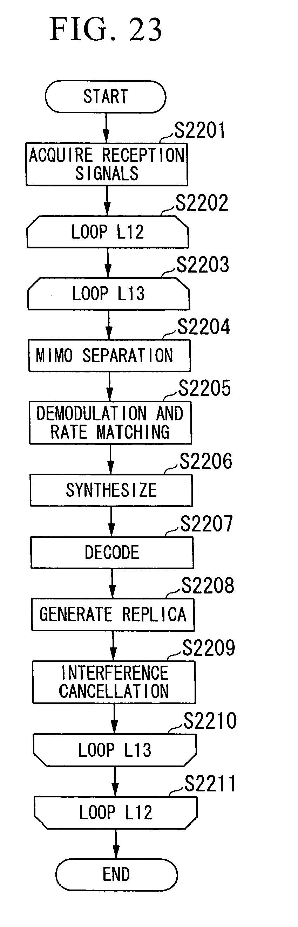

FIG. 23 is a flowchart illustrating an example of the process of extracting the information bits from the initial transmission packets, which are included in the previously received signals including the initial transmission packets corresponding to the retransmission packets, and the control performed by the reception packet management unit 1910. First, the previously received signals including the initial transmission packets corresponding to the retransmission packets are acquired from the reception signal storage unit 1909 (step S2201). Subsequently, the processes (steps S2202 to S2211) of a loop L12 for the initial transmission packets corresponding to the retransmission packets are performed.

In the repetition process, the transmission data detection and the removal of the interference from the data signals including the next transmission data are repeatedly performed. That is, the processes (steps S2203 to S2210) of a loop L13 are performed.

The MIMO separation unit 2005 performs the MIMO stream separation on the initial transmission packets using the propagation channel estimation value which is obtained upon receiving the reception signal and is stored in the propagation channel estimation value storage unit 1806 (step S2204).

The signal subjected to the MIMO separation process is processed by the de-interleaver unit 2006. Subsequently, the demodulation unit 2007 and the rate matching unit 2008 perform the demodulation process and the rate matching process, respectively (step S2205) to obtain the coded bit LLR.

Subsequently, the synthesis unit 2009 synthesizes the coded bit LLR obtained in step S2205 and the coded bit LLR (the bit LLR stored in step S2122 of FIG. 22) of the retransmission packets corresponding to the initial transmission packets (step S2206). Then, the decoding unit 2010 performs a decoding process using the coded bit LLR obtained by the synthesis process (step S2206).

The symbol replica generation unit 2004 and the reception replica generation unit 2002 generate the stream replica using the coded bit LLR output from the decoding unit 2010 (step S2208). Then, the interference is removed by the subtraction in the subtraction unit 2003 (step S2209). However, it is preferable that the replica of the retransmission packet is also cancelled when the stream replica is cancelled in step S2209.

The same HARQ process as that of the second embodiment can be performed even in a system in which the interference cancellation process between the streams is performed in the reception device 1900 that performs MIMO communication.

Thus, in this embodiment, the plurality of initial transmission packets are multiplexed and transmitted from the transmission device 1800 to the reception device 1900. Then, the reception device 1900 detects the data while removing the interference (other multiplexed packets). When the detection of the data fails, the retransmission packet is transmitted from the transmission device 1800 to the reception device 1900. When the detection of the plurality of multiplexed initial transmission packets fails and the retransmission packets corresponding to some packets are transmitted, both the some packets and the other initial transmission packets which fail to be detected the first time are detected again. On the other hand, when the detection of the data is successful, information indicating success of the detection is transmitted to the base station. In this way, since the number of downlink retransmission packets can be reduced, throughput is improved.

In the above-described embodiments, the synthesis unit synthesizes the bit LLR output from the demodulation unit, but the present invention is not limited thereto. For example, a modulated symbol sequence before the demodulation may be synthesized only in a case where the same rate matching process is performed both on the initial transmission packets and the retransmission packets in the transmission device. In this case, the demodulated symbol sequence may be stored instead of storing the demodulated bit LLR.

In the above-described embodiments, the coded bit LLR output from the decoding unit 610 is used when the replica of the data signal is generated, irrespective of whether the transmission data detection is successful. However, the present invention is not limited thereto. Preferably, the replica of the data signal for which the transmission data detection is successful is generated using the information bits output from the decoding unit 610. In this way, accuracy of the generation of the replica can be improved.

In the above-described embodiments, when the retransmission packets are synthesized, the transmission data included in the initial transmission packets is re-detected, and then the transmission data re-detection is successful, the ACK is reported to the transmission device. When the transmission data re-detection fails, the NACK is reported to the transmission device. However, the present invention is not limited thereto. For example, when the transmission data re-detection is successful, the ACK may be reported to the transmission device. When the transmission data re-detection fails, no report may be performed. In this way, depending on whether the transmission data re-detection is successful, different report processing may be performed. In this case, when the ACK is not reported for a predetermined time, the transmission device may perform the same process as when the NACK is reported.

In the above-described embodiments, hybrid automatic repeat request (HARQ) is used. However, the embodiments are applicable to ARQ (when the initial transmission packets and the retransmission packets are not synthesized). Instead of synthesizing the initial transmission packets and the retransmission packets, the symbol replicas may be generated using the decoding result (or the demodulation result) of the retransmission packets and the interference signal replicas may be generated using the symbol replicas and the propagation channel estimation result at the initial transmission time. In this case, when the detection accuracy of the transmission data of the retransmission packets is better than that of the initial transmission packets, for example, when the characteristic of the propagation channel at transmission time of the retransmission packet is better than that of the initial transmission packets or the retransmission packets are transmitted at a low transmission rate, an advantage can be obtained.

In the above-described embodiments, a program realizing the functions of the units of the transmission device and the units of the reception device may be recorded in a computer readable record medium. The program recorded in the record medium may be read and executed by a computer system to control the transmission device or the reception device. The "computer system" includes an OS or a hardware device such as a peripheral device.

The "computer readable recording medium" is a portable medium such as a flexible disc, magneto-optical disc, ROM and CD-ROM, and a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be one for implementing part of the above functions, or the above functions may be implemented in combination with a program already recorded to the computer system.

The embodiments of the present invention have hitherto been described with reference to the drawings, but the present invention is not limited to the specific configurations of the embodiments. However, the appended claims are intended to cover modifications without departing from the scope of the present invention.

Industrial applicability

The present invention is applicable to a reception device, a transmission device, a communication system, and a communication method capable of reducing the number of retransmissions of signals transmitted from the transmission device to the reception device.

**Claims**

1. A reception device which communicates with a transmission device, the reception device comprising:

   a reception unit which receives a signal in which a plurality of data signals are multiplexed, from the transmission device; and
   a data signal detection unit which determines whether detection of transmission data for each data signal from the reception signal received by the reception unit is successful,
   wherein the reception unit further receives, from the transmission device, a retransmission data signal corresponding to at least one of data signals for which transmission data detection has failed among the plurality of multiplexed data signals, and
   the data signal detection unit determines whether re-detection of the transmission data included in the data signal corresponding to the retransmission data signal among the plurality of multiplexed data signals and a data signal not corresponding to the at least one retransmission data signal, from the reception signal and the retransmission data signal, is successful.

2. The reception device according to claim 1, wherein the data signal detection unit comprises:

   a data signal replica generation unit which generates a data signal replica which is a replica of each data signal;
   an interference signal replica generation unit which generates an interference signal replica from the data signal replica;
   an interference removal unit which subtracts the interference signal replica from the reception signal;
   a signal synthesis unit which synthesizes the reception signals from which the interference signal replica is removed; and
   a determination unit which performs detection of the transmission data included in the plurality of multiplexed data signals from the signal synthesized by the signal synthesis unit.

3. The reception device according to claim 2, wherein the signal synthesis unit comprises:

   a demodulation unit which demodulates the reception signal from which the interference signal replica is removed and the retransmission signal; and
   a synthesis unit which synthesizes the demodulation result of the reception signal from which the interference signal replica is removed, and the demodulation result of the retransmission signal.

4. The reception device according to claim 3, wherein the demodulation unit outputs likelihood information of the transmission data included in the reception signal from which the interference signal replica is removed, and the retransmission signal.

**5.** The reception device according to claim 4, wherein the demodulation unit outputs log likelihood ratios of the transmission data included in the reception signal from which the interference signal replica is removed and the retransmission signal, and
the synthesis unit synthesizes the results by adding the log likelihood ratio of the transmission data included in the reception signal from which the interference signal replica is removed to the log likelihood ratio of the transmission data included in the retransmission signal.

**6.** The reception device according to claim 2, wherein the interference signal replica generation unit generates the interference signal replica for each of the detected data signals.

**7.** The reception device according to claim 2, wherein the interference signal replica generation unit generates the interference signal replicas for the data signals excluding an initially detected data signal among the plurality of detected data signals.

**8.** The reception device according to claim 1, further comprising a report transmission unit which reports, to the transmission device, success/failure information for the data signal for which the transmission data re-detection is successful, based on success or failure in the transmission data re-detection output from the data signal detection unit.

**9.** The reception device according to claim 8, wherein the report transmission unit reports the success/failure information for each data signal to the transmission device based on success or failure in the transmission data detection for each of the multiplexed data signals, and
the report transmission unit reports, to the transmission device, only the success/failure information for the data signal for which the transmission data re-detection is successful, based on the success or failure in the transmission data re-detection.

**10.** The reception device according to claim 1, further comprising a report transmission unit which reports, to the transmission device, success/failure information for the data signal for which the transmission data re-detection fails, based on success or failure in the transmission data re-detection output from the data signal detection unit.

**11.** The reception device according to claim 1, wherein the plurality of data signals are subjected to code spreading multiplexing, and
the data signal detection unit comprises a de-spreading unit which performs a de-spreading process on the reception signal.

**12.** The reception device according to claim 1, wherein the plurality of data signals are a spatially multiplexed stream, and
the data signal detection unit comprises a stream separation unit which performs stream separation on the reception signal.

**13.** A transmission device which communicates with a reception device, comprising:

a transmission signal generation unit which generates a signal in which a plurality of data signals are multiplexed, from a plurality of transmission data;
a transmission unit which transmits the signal generated by the transmission signal generation unit to the reception device; and
a report reception unit which receives success/failure information reported from the reception device, the success/failure information indicating whether transmission data detection for each data signal is successful,
wherein the transmission signal generation unit further generates retransmission signals for some of the data signals for which the success/failure information indicates failure in the transmission data detection, and
the transmission unit further transmits the retransmission signal to the reception device.

**14.** The transmission device according to claim 13, further comprising a transmission data storage unit which stores the plurality of transmission data,
wherein the transmission signal generation unit generates the retransmission signal from the transmission data stored in the transmission data storage unit.

**15.** The transmission device according to claim 14, wherein the report reception unit further receives success/failure information from the reception device, the success/failure information being reported from the reception device and indicating whether transmission data re-detection is successful.

**16.** The transmission device according to claim 15, wherein the transmission data storage unit deletes the transmission data for which the success/failure information indicating whether the transmission data re-detection is successful is reported.

**17.** A communication system comprising a transmission device and a reception device,
wherein the transmission device comprises:

a transmission signal generation unit which generates a signal in which a plurality of data signals are multiplexed, from a plurality of transmission data;
a transmission unit which transmits the signal generated by the transmission signal generation unit to the reception device; and
a report reception unit which receives success/failure information reported from the reception device, the success/failure information indicating whether transmission data detection for each data signal is successful,
the transmission signal generation unit further generates retransmission signals for some of the data signals for which the success/failure information indicates failure in the transmission data detection, and
the transmission unit further transmits the retransmission signal to the reception device, and

wherein the reception device comprises:

a reception unit which receives the signal in which a plurality of data signals are multiplexed, from the transmission device; and
a data signal detection unit which determines whether detection of transmission data for each data signal from the reception signal received by the reception unit is successful,
the reception unit further receives a retransmission data signal corresponding to at least one data signal for which the transmission data detection has failed, among the plurality of multiplexed data signals, and
the data signal detection unit determines whether re-detection of the transmission data included in the data signal corresponding to the retransmission data signal among the plurality of multiplexed data signals and a data signal not corresponding to the at least one retransmission data signal, from the reception signal and the retransmission data signal, is successful.

**18.** A communication method using a reception device which communicates with a transmission device, wherein the reception device executes:

receiving, by a reception unit, a signal in which a plurality of data signals are multiplexed, from the transmission device;
determining, by a data signal detection unit, whether detection of transmission data for each data signal from the reception signal received by the reception unit is successful;
further receiving, by the reception unit, a retransmission data signal corresponding to at least one of data signals for which the transmission data detection fails among the plurality of multiplexed data signals; and
determining, by the data signal detection unit, whether re-detection of transmission data included in the data signal corresponding to the retransmission data signal among the plurality of multiplexed data signals and a data signal not corresponding to the at least one retransmission data signal, from the reception signal and the retransmission data signal is successful.

**19.** A communication method using a reception device which communicates with a transmission device, wherein the transmission device executes:

generating, by a transmission signal generation unit, a signal in which a plurality of data signals are multiplexed, from a plurality of transmission data;
transmitting, by a transmission unit, the signal generated by the transmission signal generation unit to the reception device;
receiving, by a report reception unit, success/failure information reported from the reception device, the success/failure information indicating whether transmission data detection for each data signal is successful;
generating, by the transmission signal generation unit, retransmission signals for some of the data signals for which the success/failure information indicates failure in the transmission data detection; and

transmitting, by the transmission unit, the retransmission signal to the reception device.

FIG. 1

BASE STATION

$P_2$ | $P_1$

S101

$NACK_2$ | $NACK_1$

S104

$P_{N+1}$

$ACK_2$ | $ACK_1$

S107

TERMINAL
(INITIAL TRANSMISSION)

$P_2$ | $P_1$

S102

$NACK_2$ | $NACK_1$

S103

S105

TERMINAL
(RETRANSMISSION)

$P_2$ | $P_1$

$P_{N+1}$

S106

$ACK_2$ | $ACK_1$

# FIG. 2

TRANSMISSION DEVICE 100

- 109 (antenna)
- 108 RADIO TRANSMISSION UNIT
- 107 GI INSERTION UNIT
- 106 MULTIPLEXING UNIT
- 104 IFFT UNIT
- 103 INTERLEAVER UNIT
- 102 CODE MULTIPLEXING UNIT
- 105 PILOT SIGNAL GENERATION UNIT
- 113 RETRANSMISSION CONTROL SIGNAL GENERATION UNIT
- 110 RADIO RECEPTION UNIT
- 111 SEPARATION UNIT
- 101-N, 101-1
  - 117 SPREADING UNIT
  - 116 MODULATION UNIT
  - 115 RATE MATCHING UNIT
  - 114 CODING UNIT
  - 118 CODING BIT STORAGE UNIT
- 112 RETRANSMISSION CONTROL UNIT
- SUCCESS/FAILURE INFORMATION
- UPLINK DATA
- INFORMATION BITS

# FIG. 3

INFORMATION
BITS ─────────────────────────────●──────────────────────────────────────► INFORMATION BITS

                                   │
                                   │        ┌─────201
                                   ●─────────────────────────►┌──────────────────┐
                                   │                          │ INTERNAL  CODER  │──────► FIRST PARITY BITS
                                   │                          └──────────────────┘
                                   │   ┌─────202        ┌─────203
                                   └──►┌─────────────────────┐   ┌──────────────────┐
                                       │ INTERNAL  INTERLEAVER│──►│ INTERNAL  CODER  │──────► SECOND PARITY BITS
                                       └─────────────────────┘   └──────────────────┘

                                                        ↖114

FIG. 4

CODED BITS D1 ······ $b^s_k$, $b^{p1}_k$, $b^{p2}_k$, $b^s_{k+1}$, $b^{p1}_{k+1}$, $b^{p2}_{k+1}$, $b^s_{k+2}$, $b^{p1}_{k+2}$, $b^{p2}_{k+2}$, $b^s_{k+3}$, $b^{p1}_{k+3}$, $b^{p2}_{k+3}$, ······

PUNCTURE PATTERN A1 ······ □ □ ▨ □ ▨ □ □ □ ▨ □ ▨ □ ······

PUNCTURED CODED BITS B1 ······ $b^s_k$, $b^{p1}_k$, $b^s_{k+1}$, $b^{p2}_{k+1}$, $b^s_{k+2}$, $b^{p1}_{k+2}$, $b^s_{k+3}$, $b^{p2}_{k+3}$, ······

EP 2 247 016 A1

## FIG. 5

CODED BITS D2 ······ $b^s_k$, $b^{p1}_k$, $b^{p2}_k$, $b^s_{k+1}$, $b^{p1}_{k+1}$, $b^{p2}_{k+1}$, $b^s_{k+2}$, $b^{p1}_{k+2}$, $b^{p2}_{k+2}$, $b^s_{k+3}$, $b^{p1}_{k+3}$, $b^{p2}_{k+3}$, ······

PUNCTURE PATTERN A2 ······ □ ▨ □ □ □ ▨ □ ▨ □ □ □ ▨ ······

PUNCTURED CODED BITS B2 ······ $b^s_k$, $b^{p2}_k$, $b^s_{k+1}$, $b^{p1}_{k+1}$, $b^s_{k+2}$, $b^{p2}_{k+2}$, $b^s_{k+3}$, $b^{p1}_{k+3}$, ······

EP 2 247 016 A1

## FIG. 6

RECEPTION DEVICE 500

- 501 (antenna)
- 502 RADIO RECEPTION UNIT
- 503 SEPARATION UNIT
- 504 PROPAGATION CHANNEL ESTIMATION UNIT
- 505 PROPAGATION CHANNEL ESTIMATION VALUE STORAGE UNIT
- 506 GI REMOVAL UNIT
- 507 FFT UNIT
- 508 RECEPTION SIGNAL STORAGE UNIT
- 509 RECEPTION PACKET MANAGEMENT UNIT
- 510 INTERFERENCE CANCELLER UNIT
- 511-1 ... 511-N
- 516 SYMBOL REPLICA GENERATION UNIT
- 517 SPREADING UNIT
- 512 BIT LLR STORAGE UNIT
- 513 SUCCESS/FAILURE INFORMATION SIGNAL GENERATION UNIT
- 514 MULTIPLEXING UNIT
- 515 RADIO TRANSMISSION UNIT

CODED BIT LLR

INFORMATION BIT

BIT LLR

SUCCESS/FAILURE INFORMATION

UPLINK DATA

EP 2 247 016 A1

## FIG. 7

## FIG. 8

# FIG. 9

| | | | | | | | | | | | | | | |
|---|---|---|---|---|---|---|---|---|---|---|---|---|---|---|
| BIT LLR D3 | ...... | $d_1s_k$, | $d_1p1_k$, | | $d_1s_{k+1}$, | | $d_1p2_{k+1}$, | $d_1s_{k+2}$, | $d_1p1_{k+2}$, | | $d_1s_{k+3}$, | | $d_1p2_{k+3}$, | ...... |
| DE-PUNCTURED BIT LLR E3 | ...... | $d_1s_k$, | $d_1p1_k$, | 0 | $d_1s_{k+1}$, | 0 | $d_1p2_{k+1}$, | $d_1s_{k+2}$, | $d_1p1_{k+2}$, | 0 | $d_1s_{k+3}$, | 0 | $d_1p2_{k+3}$, | ...... |

PUNCTURE PATTERN A1 ......

EP 2 247 016 A1

# FIG. 10

EP 2 247 016 A1

BIT LLR D4 ...... $d_2{}^s{}_k$,      $d_2{}^{p2}{}_k$,   $d_2{}^s{}_{k+1}$,   $d_2{}^{p1}{}_{k+1}$,      $d_2{}^s{}_{k+2}$,      $d_2{}^{p2}{}_{k+2}$,   $d_2{}^s{}_{k+3}$,   $d_2{}^{p1}{}_{k+3}$,      ......

PUNCTURE PATTERN A2 ......

DE-PUNCTURED LLR E4 ...... $d_2{}^s{}_k$,   0   $d_2{}^{p2}{}_k$,   $d_2{}^s{}_{k+1}$,   $d_2{}^{p1}{}_{k+1}$,   0   $d_2{}^s{}_{k+2}$,   0   $d_2{}^{p2}{}_{k+2}$,   $d_2{}^s{}_{k+3}$,   $d_2{}^{p1}{}_{k+3}$,   0   ......

# FIG. 11

EP 2 247 016 A1

DE-PUNCTURED BIT LLR E5 ...... $d_1{}^s{}_k$, $d_1{}^{p1}{}_k$, 0 $d_1{}^s{}_{k+1}$, 0 $d_1{}^{p2}{}_{k+1}$, $d_1{}^s{}_{k+2}$, $d_1{}^{p1}{}_{k+2}$, 0 $d_1{}^s{}_{k+3}$, 0 $d_1{}^{p2}{}_{k+3}$, ......

DE-PUNCTURED BIT LLR E6 ...... $d_2{}^s{}_k$, 0 $d_2{}^{p2}{}_k$, $d_2{}^s{}_{k+1}$, $d_2{}^{p1}{}_{k+1}$, 0 $d_2{}^s{}_{k+2}$, 0 $d_2{}^{p2}{}_{k+2}$, $d_2{}^s{}_{k+3}$, $d_2{}^{p1}{}_{k+3}$, 0 ......

SYNTHESIZED BIT LLR F5 ...... $d_1{}^s{}_k+d_2{}^s{}_k$, $d_1{}^{p1}{}_k$, $d_2{}^{p2}{}_k$, $d_1{}^s{}_{k+1}+d_2{}^s{}_{k+1}$, $d_2{}^{p1}{}_{k+1}$, $d_1{}^{p2}{}_{k+1}$,

$d_1{}^s{}_{k+2}+d_2{}^s{}_{k+2}$, $d_1{}^{p1}{}_{k+2}$, $d_2{}^{p2}{}_{k+2}$, $d_1{}^s{}_{k+3}+d_2{}^s{}_{k+3}$, $d_2{}^{p1}{}_{k+3}$, $d_1{}^{p2}{}_{k+3}$, ......

FIG. 12

START

↓ S1101

RECEIVE

↓ S1102

STORE RECEPTION SIGNALS

↓ S1103

PROPAGATION CHANNEL COMPENSATION

↓ S1104

LOOP L1

↓ S1105

DEMODULATION AND RATE MATCHING

↓ S1106

INITIAL TRANSMISSION? —NO→

YES ↓

S1120 SECOND OR LATER TIME? —YES→ S1121 SYNTHESIZE

NO ↓ ←

S1122 STORE BIT LLR

↓ S1107

DECODE

↓ S1108

LOOP L1

↓ S1109

LOOP L2

↓ S1110

LOOP L3

↓ S1111

GENERATE REPLICA

↓ S1112

LOOP L3

S1113

LOOP L4

↓ S1114

INTERFERENCE CANCELLATION

↓ S1115

PROPAGATION CHANNEL COMPENSATION

↓ S1116

DEMODULATION AND RATE MATCHING

↓ S1117

DECODE

↓ S1118

LOOP L4

↓ S1119

LOOP L2

↓

END

FIG. 13

START

↓ S1201

ACQUIRE RECEPTION
SIGNAL

↓ S1202

PROPAGATION CHANNEL
COMPENSATION

↓ S1203

LOOP L5

↓ S1204

DEMODULATION AND
RATE MATCHING

↓ S1205

SYNTHESIZE

↓ S1206

DECODE

↓ S1207

LOOP L5

↓ S1208

LOOP L6

↓ S1209

LOOP L7

↓ S1210

GENERATE REPLICA

↓ S1211

LOOP L7

↓ S1212

LOOP L8

↓ S1213

INTERFERENCE
CANCELLATION

↓ S1214

PROPAGATION CHANNEL
COMPENSATION

↓ S1215

DEMODULATION AND
RATE MATCHING

↓ S1216

SYNTHESIZE

↓ S1217

DECODE

↓ S1218

LOOP L8

↓ S1219

LOOP L6

↓

END

FIG. 14

BASE STATION

| $P_N$ |
| :---: |
| $\vdots$ |
| $P_2$ |
| $P_1$ |

| $NACK_N$ |
| :---: |
| $\vdots$ |
| $NACK_2$ |
| $NACK_1$ |

| $P_{2N}$ |
| :---: |
| $\vdots$ |
| $P_{N+2}$ |
| $P_{N+1}$ |

| $ACK_{2N}$ |
| :---: |
| $\vdots$ |
| $ACK_{N+2}$ |

| $ACK_N$ |
| :---: |
| $\vdots$ |
| $ACK_2$ |
| $ACK_1$ |

S201

S203

S204

S205

S208

S207

TERMINAL
(INITIAL TRANSMISSION)

| $P_N$ |
| :---: |
| $\vdots$ |
| $P_2$ |
| $P_1$ |

S202

| $NACK_N$ |
| :---: |
| $\vdots$ |
| $NACK_2$ |
| $NACK_1$ |

| $P_{2N}$ |
| :---: |
| $\vdots$ |
| $P_{N+2}$ |

| $ACK_{2N}$ |
| :---: |
| $\vdots$ |
| $ACK_{N+2}$ |

S206

S210

TERMINAL
(RETRANSMISSION)

| $P_N$ |
| :---: |
| $\vdots$ |
| $P_2$ |
| $P_1$ |

S209

| $P_{N+1}$ |

| $ACK_N$ |
| :---: |
| $\vdots$ |
| $ACK_2$ |
| $ACK_1$ |

# FIG. 15

EP 2 247 016 A1

FIG. 16

FIG. 17

1601

1600

RECEPTION DEVICE

1605
PROPAGATION CHANNEL
ESTIMATION VALUE
STORAGE UNIT

1604
PROPAGATION CHANNEL
ESTIMATION UNIT

1602
RADIO
RECEPTION
UNIT

1603
SEPARATION
UNIT

1606
GI REMOVAL
UNIT

1607
FFT
UNIT

1610
INTERFERENCE
CANCELLER UNIT

1608
RECEPTION SIGNAL
STORAGE UNIT

INFORMATION
BITS

RECEPTION PACKET
MANAGEMENT UNIT

1609

BIT LLR

SUCCESS/FAILURE
INFORMATION

1613
SUCCESS/FAILURE
INFORMATION
SIGNAL
GENERATION UNIT

1612
BIT LLR STORAGE UNIT

1615
RADIO
TRANSMISSION
UNIT

1614
MULTIPLEXING
UNIT

UPLINK DATA

EP 2 247 016 A1

FIG. 18

FIG. 19

TRANSMISSION DEVICE 1800

INFORMATION BITS

1814 CODING UNIT

1815 RATE MATCHING UNIT

1816 MODULATION UNIT

1803 INTERLEAVER UNIT

1804 IFFT UNIT

1806 MULTIPLEXING UNIT

1807 GI INSERTION UNIT

1808 RADIO TRANSMISSION UNIT

CODING BIT STORAGE UNIT

1818

1805 PILOT SIGNAL GENERATION UNIT

1809-1 1809-N

1801-N

1801-1

RETRANSMISSION CONTROL UNIT

1812

RETRANSMISSION CONTROL SIGNAL GENERATION UNIT

1813

SUCCESS/FAILURE INFORMATION

1811 SEPARATION UNIT

1810 RADIO RECEPTION UNIT

UPLINK DATA

EP 2 247 016 A1

# FIG. 20

EP 2 247 016 A1

1901-M

1901-1

1900

RECEPTION DEVICE

1902-M

1902-1

1906 — PROPAGATION CHANNEL ESTIMATION VALUE STORAGE UNIT

1905 — PROPAGATION CHANNEL ESTIMATION UNIT

1903 — RADIO RECEPTION UNIT

1904 — SEPARATION UNIT

1907 — GI REMOVAL UNIT

1908 — FFT UNIT

1909 — RECEPTION SIGNAL STORAGE UNIT

1911 — INTERFERENCE CANCELLER UNIT

INFORMATION BIT

SUCCESS/FAILURE INFORMATION

RECEPTION PACKET MANAGEMENT UNIT

1910

BIT LLR

1913 — SUCCESS/FAILURE INFORMATION SIGNAL GENERATION UNIT

1912 — BIT LLR STORAGE UNIT

1915 — RADIO TRANSMISSION UNIT

1914 — MULTIPLEXING UNIT

UPLINK DATA

FIG. 21

EP 2 247 016 A1

FIG. 22

```
              START
                │  S2101
        ┌────────────────┐
        │    RECEIVE     │
        └────────────────┘
                │  S2102
        ┌────────────────┐
        │ STORE RECEPTION│
        │    SIGNALS     │
        └────────────────┘
                │  S2103
        ┌────────────────┐
        │    LOOP L9     │
        └────────────────┘
                │  S2104
        ┌────────────────┐
        │ MIMO SEPARATION│
        └────────────────┘
                │  S2105                                S2120
        ┌────────────────┐                      ┌──────────────────┐
        │DEMODULATION AND│─────────┐            │   SECOND OR      │  YES
        │ RATE MATCHING  │         │            │  LATER TIME?     │───────┐
        └────────────────┘         │            └──────────────────┘       │  S2121
                │  S2106           │                     │  NO      ┌──────────────┐
        ┌────────────────┐   NO    │                     │          │  SYNTHESIZE  │
        │    INITIAL     │─────────┘                     │          └──────────────┘
        │ TRANSMISSION?  │                               │                 │
        └────────────────┘                               │  S2122          │
                │  YES                            ┌──────────────┐◄─────────┘
                │  S2107                          │ STORE BIT LLR│
        ┌────────────────┐                        └──────────────┘
        │     DECODE     │◄──────────────────────────────┘
        └────────────────┘
                │  S2108                                  S2114
        ┌────────────────┐                        ┌──────────────────┐
        │GENERATE REPLICA│                        │ DEMODULATION AND │
        └────────────────┘                        │   RATE MATCHING  │
                │  S2109                           └──────────────────┘
        ┌────────────────┐                                 │  S2115
        │  INTERFERENCE  │                          ┌──────────────┐
        │ CANCELLATION   │                          │    DECODE    │
        └────────────────┘                          └──────────────┘
                │  S2110                                   │  S2116
        ┌────────────────┐                          ┌──────────────────┐
        │    LOOP L9     │                          │ GENERATE REPLICA │
        └────────────────┘                          └──────────────────┘
                │  S2111                                   │  S2117
        ┌────────────────┐                          ┌──────────────────┐
        │    LOOP L10    │                          │   INTERFERENCE   │
        └────────────────┘                          │   CANCELLATION   │
                │  S2112                             └──────────────────┘
        ┌────────────────┐                                 │  S2118
        │    LOOP L11    │                          ┌──────────────┐
        └────────────────┘                          │   LOOP L11   │
                │  S2113                             └──────────────┘
        ┌────────────────┐                                 │  S2119
        │ MIMO SEPARATION│                          ┌──────────────┐
        └────────────────┘                          │   LOOP L10   │
                │                                    └──────────────┘
                └──────────────────┐                        │
                                   │                        ▼
                                                          END
```

# FIG. 23

```
                    ┌─────────┐
                    │  START  │
                    └────┬────┘
                         │          ╭S2201
              ┌──────────▼──────────┐
              │ ACQUIRE RECEPTION   │
              │      SIGNALS        │
              └──────────┬──────────┘
                         │          ╭S2202
              ┌──────────▼──────────┐
              │      LOOP L12        │
              └──────────┬──────────┘
                         │          ╭S2203
              ┌──────────▼──────────┐
              │      LOOP L13        │
              └──────────┬──────────┘
                         │          ╭S2204
              ┌──────────▼──────────┐
              │   MIMO SEPARATION   │
              └──────────┬──────────┘
                         │          ╭S2205
              ┌──────────▼──────────┐
              │ DEMODULATION AND    │
              │   RATE MATCHING     │
              └──────────┬──────────┘
                         │          ╭S2206
              ┌──────────▼──────────┐
              │     SYNTHESIZE      │
              └──────────┬──────────┘
                         │          ╭S2207
              ┌──────────▼──────────┐
              │       DECODE        │
              └──────────┬──────────┘
                         │          ╭S2208
              ┌──────────▼──────────┐
              │  GENERATE REPLICA   │
              └──────────┬──────────┘
                         │          ╭S2209
              ┌──────────▼──────────┐
              │    INTERFERENCE     │
              │   CANCELLATION      │
              └──────────┬──────────┘
                         │          ╭S2210
              ┌──────────▼──────────┐
              │      LOOP L13        │
              └──────────┬──────────┘
                         │          ╭S2211
              ┌──────────▼──────────┐
              │      LOOP L12        │
              └──────────┬──────────┘
                         │
                    ┌────▼────┐
                    │   END   │
                    └─────────┘
```

## INTERNATIONAL SEARCH REPORT

| International application No. |
|---|
| PCT/JP2009/052650 |

A.   CLASSIFICATION OF SUBJECT MATTER
*H04L1/16*(2006.01)i, *H04B1/707*(2006.01)i, *H04J11/00*(2006.01)i, *H04J99/00*
(2009.01)i, *H04L29/08*(2006.01)i

According to International Patent Classification (IPC) or to both national classification and IPC

B.   FIELDS SEARCHED

Minimum documentation searched (classification system followed by classification symbols)
H04L1/16, H04B1/707, H04J11/00, H04J99/00, H04L29/08

Documentation searched other than minimum documentation to the extent that such documents are included in the fields searched
Jitsuyo Shinan Koho         1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2006-238423 A  (Matsushita Electric Industrial Co., Ltd.), 07 September, 2006 (07.09.06), Abstract; Par. Nos. [0040] to [0045] & US 2009/0016263 A1    & WO 2006/080352 A1 & CN 101133670 A | 1-19 |
| A | WO 2006/64857 A1  (Matsushita Electric Industrial Co., Ltd.), 22 June, 2006 (22.06.06), Full text & EP 1821440 A1          & CN 1790976 A & KR 10-2007-0086267 A  & CN 101080893 A | 1-19 |

| [X]   Further documents are listed in the continuation of Box C. | [ ]   See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 May, 2009 (08.05.09) | 19 May, 2009 (19.05.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## INTERNATIONAL SEARCH REPORT

| International application No. |
|---|
| PCT/JP2009/052650 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2007/61016 A1  (Matsushita Electric Industrial Co., Ltd.), 31 May, 2007 (31.05.07), Full text & CN 1972176 A | 1-19 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008040228 A
- JP 2004221702 A
- JP 2005198223 A

**Non-patent literature cited in the description**

- **Y. Zhou ; J. Wang ; M. Sawahashi.** Downlink Transmission of Broadband OFCDM Systems-Part I: Hybrid Detection. *IEEE Transaction on Communication,* April 2005, vol. 53 (4), 718-729
- **D. Chase.** Code combining-A maximum likelihood decoding approach for combing and arbitrary number of noisy packets. *IEEE Trans. Commun.,* May 1985, vol. COM-33, 385-393
- **J. Hagenauer.** Rate-compatible punctured convolutional codes (RCPC codes) and their application. *IEEE Trans. Commun.,* April 1988, vol. 36, 389-400